(19)

Europäisches
Patentamt
European
Patent Office
Office européen
des brevets

(11) **EP 4 311 344 A1**

(12) **EUROPEAN PATENT APPLICATION**
published in accordance with Art. 153(4) EPC

(43) Date of publication:
**24.01.2024 Bulletin 2024/04**

(21) Application number: **22804014.3**

(22) Date of filing: **18.05.2022**

(51) International Patent Classification (IPC):
***H04W 72/04*** (2023.01)

(52) Cooperative Patent Classification (CPC):
**G01S 13/88; H04W 72/04**

(86) International application number:
**PCT/CN2022/093660**

(87) International publication number:
**WO 2022/242694 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.05.2021 CN 202110552778**

(71) Applicant: **Huawei Technologies Co., Ltd.
Shenzhen, Guangdong 518129 (CN)**

(72) Inventors:
• **YU, Jian
Shenzhen, Guangdong 518129 (CN)**
• **SHAO, Jiafeng
Shenzhen, Guangdong 518129 (CN)**
• **ZHAO, Wenqi
Shenzhen, Guangdong 518129 (CN)**
• **LI, Yiran
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND COMMUNICATION APPARATUS**

(57)    This application provides a communication method and a communication apparatus. The communication method includes: A network device sends downlink control information DCI to a terminal device, where the DCI indicates a first time domain resource in a first slot, the first time domain resource includes M time domain sub-resources, at least two adjacent time domain sub-resources in the M time domain sub-resources are at an interval of a first time period, and M is an integer greater than or equal to 2. The network device sends a physical downlink shared channel PDSCH on the first time domain resource. This solution is used in a harmonized communication and sensing system, to improve resource utilization of the harmonized communication and sensing system.

FIG. 5

**Description**

**TECHNICAL FIELD**

This application relates to the communication field, and in particular, to a communication method and a communication apparatus.

**BACKGROUND**

Radar sensing, also known as radar sounding, is widely used in traffic monitoring, weather detection, security monitoring, electromagnetic imaging, and the like in the air and on the ground. With increasing detection demands, costs of a radar device are high when a radar is independently used to perform detection over a wide coverage area, especially in a continuous networking scenario. Considering that wireless communication has abundant spectrum resources, a large deployment scale, and wide coverage, radar sensing and wireless communication may be integrated, that is, harmonized communication and sensing. This can meet both a wireless communication demand and a detection demand. Currently, a signal in a wireless communication system is mainly used for communication. For a harmonized communication and sensing system, how to improve resource utilization of the harmonized communication and sensing system becomes an urgent problem to be resolved.

**SUMMARY**

According to a communication method and a communication apparatus provided in embodiments of this application, resource utilization of a harmonized communication and sensing system may be improved.

According to a first aspect, a communication method is provided. The method may be performed by a network device or a chip disposed in the network device. The network device may be an access network device, or may be a network unit that implements a corresponding function of the access network device. The method includes: The network device sends downlink control information DCI to a terminal device, where the DCI indicates a first time domain resource in a first slot, the first time domain resource includes M time domain sub-resources, at least two adjacent time domain sub-resources in the M time domain sub-resources are at an interval of a first time period, and M is an integer greater than or equal to 2; and the network device sends a physical downlink shared channel PDSCH on the first time domain resource.

The foregoing solution is used in a harmonized communication and sensing system, to improve resource utilization of the harmonized communication and sensing system. Specifically, new DCI is designed to notify the foregoing discontinuous time domain sub-resources, so that overheads of using the DCI may be reduced, and resource utilization may be improved. Further, a signal carried by the PDSCH is used as the sensing signal, to improve resource utilization. Further, the sensing signal is sent by using discontinuous time domain resources, so that time domain resources occupied by the sensing signal may be reduced, and resource utilization may be improved. In addition, time domain resource allocation may be more flexible by using the newly designed DCI.

With reference to the first aspect, in a possible design, the method further includes: receiving an echo signal of the signal carried by the PDSCH, where the echo signal is used to sense a first target.

With reference to the first aspect, in a possible design, the method further includes: before the sending downlink control information DCI to a terminal device, sending radio resource control RRC signaling to the terminal device, where the RRC signaling indicates at least one candidate time domain resource, each candidate time domain resource is corresponding to one index, and the at least one candidate time domain resource includes the first time domain resource; and the DCI specifically includes an index corresponding to the first time domain resource. This solution may reduce signaling overheads of the DCI and improve reliability of signaling transmission.

According to a second aspect, a communication method is provided. The method may be performed by a terminal device or a chip disposed in the terminal device. The method includes: The terminal device receives downlink control information DCI, where the DCI indicates a first time domain resource in a first slot, the first time domain resource includes M time domain sub-resources, at least two adjacent time domain sub-resources in the M time domain sub-resources are at an interval of a first time period, and M is an integer greater than or equal to 2; and the terminal device receives a physical downlink shared channel PDSCH on the first time domain resource.

In the foregoing solution, new DCI is designed to notify the foregoing discontinuous time domain sub-resources, so that overheads of using the DCI may be reduced, and resource utilization may be improved. In addition, time domain resource allocation may be more flexible by using the newly designed DCI.

With reference to the second aspect, in a possible design, the method further includes: before receiving the DCI, receiving radio resource control RRC signaling, where the RRC signaling indicates at least one candidate time domain resource, each candidate time domain resource is corresponding to one index, the at least one candidate time domain resource includes the first time domain resource; and the DCI includes an index corresponding to the first time domain resource. This solution may reduce signaling overheads of using the DCI directly and improve reliability of signaling transmission.

With reference to any one of the foregoing aspects or designs, in a possible design, the method further includes: receiving an echo signal of a signal carried by the PDSCH, where the echo signal is used to sense a first target.

With reference to any one of the foregoing aspects or designs, in a possible design, the DCI includes start position information of each of the M time domain sub-resources, and/or duration information of each of the M time domain sub-resources. In this solution, DCI provides more complete information, and resource scheduling is more flexible.

It may be understood that the start position information of each time domain sub-resource may be included in the RRC signaling or fixed in a protocol, or the duration information of each time domain sub-resource may be included in the RRC signaling or fixed in a protocol. To be specific, the foregoing information may be included in the RRC signaling, DCI signaling, or combined signaling thereof, or a part of the foregoing information is included in the RRC signaling, DCI signaling, or combined signaling thereof, and another part may be fixed in a protocol. This may further reduce overheads of the DCI and improve reliability of information transmission.

With reference to any one of the foregoing aspects or designs, in a possible design, the DCI includes at least one of start position information $S_1$ of a first time domain sub-resource in the M time domain sub-resources, duration information $L_1$ of the first time domain sub-resource, and an offset $O_1$ of the first time domain sub-resource, where there is a first association relationship between start position information $S_i$ of an $i^{th}$ time domain sub-resource in the M time domain sub-resources and at least one of $S_1$, $L_1$, and $O_1$. Specifically, the first association relationship may be $S_i = n * S_1$, $S_i = i * S_1$, $S_i = n * L_1 + 1$, $S_i = n * O_1$, $S_i = S_{i-1} + O_1$, $S_i = S_{i-1} - 1 + O_1$, $S_i = S_{i-1} + O_1$, or $S_i = S_{i-1} + L_1 - 1 + O_1$, and duration information $L_i$ of the $i^{th}$ time domain sub-resource satisfies $L_i = L_1$, where i is an integer greater than or equal to 2 and less than or equal to M. This solution may reduce signaling overheads of the DCI while ensuring resource scheduling flexibility.

It may be understood that, when a part of $S_1$, $L_1$, and $O_1$ is included in the DCI, another part of $S_1$, $L_1$, and $O_1$ may be included in higher layer signaling or fixed in a protocol, or a part of the another part is included in higher layer signaling, and another part of the another part is fixed in a protocol. This may further reduce overheads of the DCI and improve reliability of information transmission.

With reference to any one of the foregoing aspects or designs, in a possible design, the DCI includes at least one of start position information $S_1$ of a first time domain sub-resource in the M time domain sub-resources, duration information $L_i$ of an $i^{th}$ time domain sub-resource in the M time domain sub-resources, and an offset $O_1$ of the first time domain sub-resource, where there is a second association relationship between start position information $S_i$ of the $i^{th}$ time domain sub-resource and at least one of $S_1$, $L_i$, and $O_1$. Specifically, the second association relationship may be $S_i = n * S_1$, $S_i = i * S_1$, $S_i =$ n * O_1$, $S_i = nS_1 + L_{i-1} - 1$, $S_i = S_1 + nL_{i-1} - 1$, or $S_i = S_{i-1} + L_1 - 1 + O_1$, where i is an integer greater than or equal to 2 and less than or equal to M. This solution may reduce signaling overheads of the DCI while ensuring resource scheduling flexibility.

It may be understood that, when a part of $S_1$, $L_i$, and $O_1$ is included in the DCI, another part of $S_1$, $L_i$, and $O_1$ may be included in higher layer signaling or fixed in a protocol. Alternatively, a part of the another part is included in higher layer signaling, and another part of the another part is fixed in a protocol. This may further reduce overheads of the DCI and improve reliability of information transmission.

With reference to any one of the foregoing aspects or designs, in a possible design, the DCI includes at least one of start position information $S_1$ of a first time domain sub-resource in the M time domain sub-resources, duration information $L_1$ of the first time domain sub-resource, and an offset $O_i$ of an $i^{th}$ time domain sub-resource in the M time domain sub-resources, where there is a third association relationship between start position information $S_i$ of the $i^{th}$ time domain sub-resource and at least one of $S_1$, $L_1$, and $O_i$. Specifically, the third association relationship may be $S_i = i * S_1$, $S_i = (i - 1) * S_1 + O_i$, $S_i = i * S_1 + O_i$, or $S_i = S_{i-1} + L_1 - 1 + O_i$, and duration information $L_i$ of the $i^{th}$ time domain sub-resource satisfies $L_i = L_1$, where i is an integer greater than or equal to 2 and less than or equal to M. This solution may reduce signaling overheads of the DCI while ensuring resource scheduling flexibility.

It may be understood that, when a part of $S_1$, $L_1$, and $O_i$ is included in the DCI, another part of $S_1$, $L_1$, and $O_i$ may be included in higher layer signaling or fixed in a protocol. Alternatively, a part of the another part is included in higher layer signaling, and another part of the another part is fixed in a protocol. This may further reduce overheads of the DCI and improve reliability of information transmission.

With reference to any one of the foregoing aspects or designs, in a possible design, the DCI includes at least one of start position information $S_1$ of a first time domain sub-resource in the M time domain sub-resources, duration information L of the first time domain sub-resource, and first indication information, where when the first indication information is a first value, the first indication information indicates that start position information $S_i$ of an $i^{th}$ time domain sub-resource in the M time domain sub-resources is determined based on at least one of $S_1$ and L. Specifically, $S_i$ satisfies $S_i = nS_{i-1} + L$, and duration information $L_i$ of the $i^{th}$ time domain sub-resource satisfies $L_i = L$, where i and n are integers greater than or equal to 2 and less than or equal to M. This solution may reduce signaling overheads of the DCI while ensuring resource scheduling flexibility.

It may be understood that, when a part of $S_1$, L, and the first indication information is included in the DCI, another part of $S_1$, L, and the first indication information may be included in higher layer signaling or fixed in a protocol, or a part of the another part is included in higher layer signaling, and one or more of $S_1$, $L$, and the first indication information that are fixed in a protocol and that are of another part of the another part may be included in the RRC signaling. This may further reduce overheads of the DCI and improve reliability of information transmission.

With reference to any one of the foregoing aspects or designs, in a possible design, the DCI includes bitmap information, the bitmap information includes N bits that are in a one-to-one correspondence with N time units in the first slot, and the M time domain sub-resources include a time unit corresponding to a bit whose value is "1", and do not include a time unit corresponding to a bit whose value is "0". This solution ensures better resource scheduling flexibility.

It may be understood that the DCI may be replaced with higher layer signaling, for example, an RRC message. For example, the bitmap information may be included in the higher layer signaling. After sending the higher layer signaling, the network device sends the DCI to the terminal device, where the DCI indicates to use or activate the first time domain resource. Still further, the network device sends the PDSCH to the terminal device by using an activated first time domain resource. Correspondingly, the terminal device receives the DCI used to activate the first time domain resource, and receives the PDSCH on the first time domain resource based on the DCI. This solution may reduce overheads of the DCI and improve reliability of signaling transmission.

With reference to any one of the foregoing aspects or designs, in a possible design, the first time period has a length of X symbols, and X is an integer greater than or equal to 1; or the first time period is Y ms, and Y is greater than 0.

With reference to any one of the foregoing aspects or designs, in a possible design, the time unit is a symbol or a mini slot.

According to a third aspect, a communication apparatus is provided, including modules or units configured to perform the method in any possible design of the first aspect.

According to a fourth aspect, a communication apparatus is provided, including modules or units configured to perform the method in any possible design of the second aspect.

According to a fifth aspect, a communication apparatus is provided, including a processor. The processor is coupled to a memory, and may be configured to execute instructions in the memory, to enable the communication apparatus to perform the method in any possible design of the first aspect. Optionally, the communication apparatus further includes a memory. Optionally, the communication apparatus further includes a transceiver and/or an antenna. Optionally, the communication apparatus may be a network device or a chip disposed in the network device.

According to a sixth aspect, a communication apparatus is provided, including a processor. The processor is coupled to a memory, and may be configured to execute instructions in the memory, to enable the communication apparatus to perform the method in any possible design of the second aspect. Optionally, the communication apparatus further includes a memory. Optionally, the communication apparatus further includes a transceiver and/or an antenna. Optionally, the communication apparatus may be a terminal device or a chip disposed in the terminal device.

According to a seventh aspect, a network device is provided, and the network device may implement the method in any possible design of the first aspect. Optionally, the network device may be a chip (for example, a baseband chip, a communication chip, or the like) or a base station device. The method may be implemented by software, hardware, or hardware executing corresponding software.

In a possible design, the network device includes a processor and a memory. The processor is configured to support the network device in performing the method in any possible design of the first aspect. The memory is configured to store instructions and/or data. Optionally, the network device further includes a radio frequency unit and an antenna.

In another possible design, the network device includes a baseband unit and a transceiver unit. The baseband unit is configured to perform an operation implemented inside the network device in any possible design of the first aspect. The transceiver unit is configured to perform an operation of sending to or receiving from the outside by the network device.

In still another possible design, the network device includes a processor and a transceiver. The processor is configured to support the network device in performing the method in any possible design of the first aspect. When the network device is a chip, the transceiver may be an input/output unit, for example, an input/output circuit or an input/output interface.

In still another possible design, the network device may include a unit module for performing a corresponding operation in any possible design of the first aspect.

According to an eighth aspect, a terminal device is provided, and the terminal device may implement the method in any possible design of the second aspect. Optionally, the terminal device may be a chip (for example, a communication chip, or the like) or user equipment. The method may be implemented by software, hardware, or hardware executing corresponding software.

In a possible design, the terminal device includes a processor and a memory. The processor is configured to support the terminal device in performing a corresponding function in any possible design of the second aspect. The memory is configured to store instructions and/or data. Optionally, the terminal device further includes a radio frequency circuit and an antenna.

In another possible design, the terminal device includes a processing apparatus and a transceiver unit. The processing apparatus includes a processor and a memory, and is configured to perform an operation implemented inside the terminal device in any possible design of the second aspect. The transceiver unit includes a radio frequency circuit and an antenna, and is configured to perform an operation of sending to or receiving from the outside by the terminal device.

In still another possible design, the terminal device includes a processor and a transceiver. The processor is configured to support the terminal device in performing the method in any possible design of the second aspect. When the terminal device is a chip, the transceiver may be an input/output unit, for example, an input/output circuit or an input/output interface.

In still another possible design, the terminal device may include a unit module for performing a corresponding operation in any possible design of the second aspect.

According to a ninth aspect, a computer-readable storage medium is provided. The computer-readable storage medium stores a computer program or instructions. When the computer program or the instructions are run, the method in any possible design of the first aspect is implemented.

According to a tenth aspect, a computer-readable storage medium is provided. The computer-readable storage medium stores a computer program or instructions. When the computer program or the instructions are run, the method in any possible design of the second aspect is implemented.

According to an eleventh aspect, a processor is provided, including: an input circuit, an output circuit, and a processing circuit. The processing circuit is configured to: receive a signal through the input circuit, and transmit the signal through the output circuit, to enable the processor to perform the method according to any one of the foregoing aspects or any possible design of the foregoing aspects. Optionally, the processor is a chip, the input circuit is an input pin, the output circuit is an output pin, and the processing circuit is a transistor, a gate circuit, a flip-flop, any logic circuit, and/or the like.

According to a twelfth aspect, a computer program product is provided. The computer program product includes a computer program (which may also be referred to as code or instructions). When the computer program is run, a computer is enabled to perform the method in any possible design of the first aspect.

According to a thirteenth aspect, a computer program product is provided. The computer program product includes a computer program (which may also be referred to as code or instructions). When the computer program is run, a computer is enabled to perform the method in any possible design of the second aspect.

**BRIEF DESCRIPTION OF DRAWINGS**

FIG. 1 is an example of an architecture of a communication system according to an embodiment of this application;
FIG. 2 is an example of a structure of a communication apparatus according to an embodiment of this application;
FIG. 3 is an example of another structure of a communication apparatus according to an embodiment of this application;
FIG. 4 is an example of a structure of a circuit system according to an embodiment of this application;
FIG. 5 is an example of a procedure of a communication method according to an embodiment of this application;
FIG. 6 is an example of a time domain resource of a sensing signal according to an embodiment of this application;
FIG. 7 is an example of time domain resource allocation information according to an embodiment of this application;
FIG. 8 is another example of time domain resource allocation information according to an embodiment of this application; and
FIG. 9 is still another example of time domain resource allocation information according to an embodiment of this application.

**DESCRIPTION OF EMBODIMENTS**

The following clearly and completely describes technical solutions in embodiments of this application with reference to the accompanying drawings.

In the specification, claims, and the accompanying drawings of this application, the terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In the specification, claims, and the accompanying drawings of this application, the terms such as "first" and "second" are only intended to distinguish between different objects but do not describe a particular order. Sequence numbers of the foregoing processes do not mean execution sequences in various embodiments of this application. The execution sequences of the processes should be determined based on functions and internal logic of the processes. Numbers or sequence numbers in the foregoing processes are merely for differentiation for ease of description, and should not constitute any limitation on an implementation process of embodiments of this application.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. A character "/" usually indicates an "or" relationship between associated objects. "At least one of the following items (pieces)" or a similar expression thereof means any combination of these items. For example, at least one (piece) of a, b, or c may represent: a, b, c, a and b, a and c, b and c, or a, b, and c.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be implemented separately, or may be properly combined with another embodiment. In addition, explanations or descriptions of terms in embodiments may be mutually referenced or explained. This is not limited herein.

A communication method and a communication apparatus provided in embodiments of this application may be used in various communication systems, especially a harmonized communication and sensing (harmonized communication and sensing, HCS) system. The system includes but is not limited to a long term evolution (long term evolution, LTE) system, a 5th generation (5th generation, 5G) system, a new radio (new radio, NR) system, a wireless fidelity (wireless fidelity, Wi-Fi) system, another 3rd generation partnership project (3rd generation partnership project, 3GPP)-related wireless communication system, a wireless communication system that may appear in the future, or the like.

The harmonized communication and sensing system is a system integrating a communication function and a sensing function. The integration of communication and sensing has the following advantages: the communication function and a radar sensing function share hardware, reducing hardware costs; the sensing function is deployed on an existing site, facilitating deployment; and collaborative networking is facilitated, and communication quality is enhanced by utilizing a sensing result to assist communication. For example, when a sensed target and a communication terminal are the same, beam measurement during communication may be reduced based on the sensing result. Alternatively, when a sensed target and a communication terminal are different, if the sensed target blocks the communication terminal, a base station may adjust a beam in time to ensure normal communication with the communication terminal.

The following describes a communication system and a communication apparatus provided in embodiments of this application.

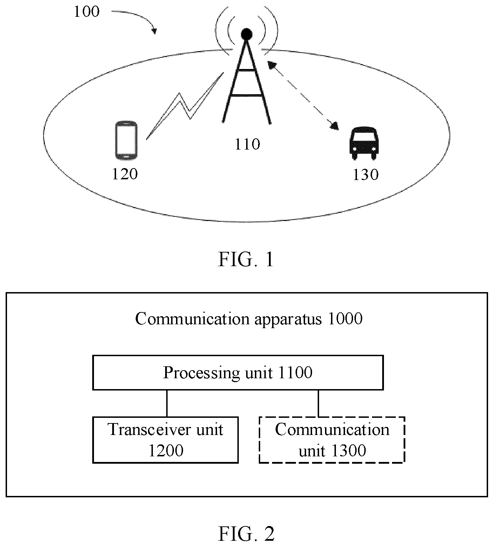

FIG. 1 shows a communication system. Specifically, the communication system is a harmonized communication and sensing system. As shown in FIG. 1, the system 100 includes at least one network device, for example, a network device 110 shown in FIG. 1. The system 100 may further include at least one terminal device, for example, a terminal device 120 shown in FIG. 1. The system 100 may further include at least one sensed target, for example, a sensed target 130 shown in FIG. 1. It may be understood that the network device and the terminal device may also be referred to as a communication device or a communication apparatus. The network device 110 is a network side device having a wireless transceiver function. For example, the network device may be a base station (base station), an evolved NodeB (evolved NodeB, eNodeB), a next generation NodeB (next generation NodeB, gNB) in a 5G mobile communication system, a transmission reception point (transmission reception point, TRP), a future evolved 3GPP base station, an access node in a Wi-Fi system, a wireless relay node, a wireless backhaul node, or the like. The network device may include one or more co-site or non-co-site transmission reception points. For another example, the network device may include a central unit (central unit, CU), a distributed unit (distributed unit, DU), or a CU and a DU. In this way, some functions of a radio access network device may be implemented by using a plurality of network function entities. The network function entities may be network elements in a hardware device, may be software functions run on dedicated hardware, or may be virtualization functions instantiated on a platform (for example, a cloud platform). For another example, in a vehicle to everything (vehicle to everything, V2X) technology, the network device may be a road side unit (road side unit, RSU). A plurality of network devices in the communication system may be base stations of a same type, or may be base stations of different types. The network device 110 may directly communicate with the terminal device by using an air interface, or may communicate with the terminal device 120 by using a relay station or another terminal device. The network device 110 may further have the sensing function. For example, after sending a sensing signal, the network device 110 receives an echo signal of the sensed target 130. The echo signal is an electromagnetic feedback signal generated after the sensing signal or an electromagnetic wave is transmitted, scattered, and reflected by the sensed target.

The network device 110 may obtain a sensing result of the sensed target based on the sensing signal and the echo signal of the sensing signal. The sensing result may include, for example, a distance or an angle between the sensed target and the network device, or positions, moving speeds, outline dimensions, or the like of the sensed target and the network device. In this way, the network device 110 may further utilize the sensing result to assist communication, improving communication quality. It should be noted that the sensing function and the communication function may be implemented by one network device, or may be implemented by a plurality of network devices through cooperation. This is not limited in embodiments of this application.

In embodiments of this application, a communication apparatus configured to implement a function of the network device may be a network device or an access network device, may be a network device or an access network device having some functions of a base station, or may be an apparatus that can support a network device or an access network device in implementing the function, for example, a chip system. The apparatus may be installed in the network device or the access network device.

The terminal device 120 is a user side device having a wireless transceiver function, and may be a fixed device, a mobile device, a handheld device (for example, a mobile phone), a wearable device, a vehiclemounted device, or a wireless apparatus (for example, a communication module, a modem, a chip system, or the like) built in the foregoing device. The terminal device is configured to connect people, things, machines, and the like, and may be widely used in various scenarios, for example, cellular communication, device-to-device (device-to-device, D2D) communication, V2X communication, machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, smart wearables, smart transportation, a smart city (smart city), an unmanned aerial vehicle, a robot, and the like. For example, the terminal device may be a handheld terminal in the cellular communication, a communication device in the D2D, an internet of things device in the MTC, a surveillance camera in the smart transportation and the smart city, a communication device in the unmanned aerial vehicle. The terminal device may be sometimes referred to as user equipment (user equipment, UE), a user terminal, a user apparatus, a subscriber unit, a subscriber station, a terminal, an access terminal, a remote station, a mobile device, a wireless communication device, or the like.

In embodiments of this application, a communication apparatus configured to implement a function of the terminal device may be a terminal device, may be a terminal device having some functions of a terminal, or may be an apparatus that can support a terminal device in implementing the function, for example, a chip system. The apparatus may be installed in the terminal device.

The sensed target 130 is a tangible object that can be sensed on the ground, for example, a ground object, for example, a mountain, a forest, or a building, and may further include a movable object, for example, a vehicle, an unmanned aerial vehicle, a pedestrian, or a terminal device. The sensed target is a target that can be sensed by a network device having the sensing function, and the target may feed an electromagnetic wave back to the network device. The sensed target may also be referred to as a detected target, a sensed object, a detected object, a sensed device, or the like. This is not limited in embodiments of this application.

In embodiments of this application, the terminal device or the network device includes a hardware layer, an operating system layer running at the hardware layer, and an application layer running at the operating system layer. The hardware layer includes hardware, for example, a central processing unit (central processing unit, CPU), a memory management unit (memory management unit, MMU), a memory (which is also referred to as a main memory), or the like. The operating system may be any one or more computer operating systems that implement service processing through a process (process), for example, a Linux operating system, a Unix operating system, an Android operating system, an iOS operating system, a Windows operating system, or the like. The application layer includes a browser, an address book, word processing software, instant messaging software, and other applications. In addition, a specific structure of an execution body of the method provided in embodiments of this application is not specifically limited in embodiments of this application, provided that a program that records code for the method provided in embodiments of this application can be run to perform communication according to the method provided in embodiments of this application. For example, the execution body of the method provided in embodiments of this application may be a terminal device or a network device, or may be a functional unit that can invoke a program and execute the program in the terminal device or the network device.

In addition, aspects or features of this application may be embodied as a method, an apparatus, or a product that uses standard programming and/or engineering technologies. The term "product" used in this application covers a computer program that can be accessed from any computer-readable component, computer-readable carrier, or computer-readable medium. For example, the computer-readable medium may include but is not limited to a magnetic storage component (for example, a hard disk, a floppy disk, a magnetic tape, or the like), an optical disc (for example, a compact disc (compact disc, CD), a digital versatile disc (digital versatile disc, DVD), or the like), a smart card, and a flash memory component (for example, an erasable programmable read-only memory (erasable programmable read-only memory, EPROM), a card, a stick, a key drive, or the like). In addition, various storage media described in this specification may indicate one or more devices and/or other machine (such as computer) readable media that are configured to store information. The term "machinereadable media" may include but are not limited to a radio channel, and various other media that can store, contain and/or carry instructions and/or data.

FIG. 2 is a schematic diagram of a structure of a communication apparatus 1000 according to an embodiment of this application. As shown in FIG. 2, the communication apparatus 1000 may include a processing unit 1100 and a transceiver unit 1200.

The communication apparatus 1000 may be used as the network device 110 or an apparatus used in the network device 110. Alternatively, the communication apparatus 1000 may be used as the terminal device 120 or an apparatus used in the terminal device 120.

The processing unit 1100 may process a received signal or information, or process a signal or information before sending the signal or the information. When the processing unit 1100 belongs to the network device 110, the processing unit 1100 may process downlink data corresponding to a sensing signal, so that the transceiver unit 1200 sends a processed sensing signal (the downlink data). Alternatively, the processing unit 1100 further processes information on which baseband processing is performed. For example, when the information received by the transceiver unit 1200 is an echo signal from a sensed target, the processing unit 1100 of the network device 110 may obtain, based on the echo signal, information including a position, a moving rate, or the like of the sensed target. For example, when the information received by the transceiver unit 1200 is feedback information from the terminal device to the downlink data, the processing unit 1100 of the network device 110 may determine, based on the feedback information, whether to retransmit the downlink data. When the processing unit 1100 belongs to the terminal device 120, the processing unit 1100 may perform baseband processing on a signal or information received by the transceiver unit 1200. For example, after the transceiver unit 1200 receives the downlink data, the processing unit 1100 performs subsequent processing on the downlink data.

The transceiver unit 1200 may receive and/or send a signal. For example, when the transceiver unit 1200 belongs to the network device 110, the transceiver unit 1200 may send a signal or information to the terminal device 120, where the signal or the information may include DCI, a PDSCH, or the like, or send a sensing signal to the sensed target 130. Correspondingly, when the transceiver unit 1200 belongs to the terminal device 120, the transceiver unit 1200 may receive the foregoing signal or the information from the network device 110. For another example, when the transceiver unit 1200 belongs to the network device 110, the transceiver unit 1200 may receive a signal or information from the terminal device 120, where the signal or the information may include a measurement report, uplink data, an uplink reference signal, receiving status information of the downlink data, or the like. Correspondingly, when the transceiver unit 1200 belongs to the terminal device 120, the transceiver unit 1200 may send the foregoing signal or the information to the network device 110.

The communication apparatus 1000 may further include a communication unit 1300. The communication unit 1300 may implement receiving and/or sending of a signal or information with another network device. For example, when the communication unit 1300 belongs to the network device 110, the communication unit 1300 may communicate with another network device (not shown in FIG. 1). For example, when the network device 110 is a base station, a CU, or a DU, and the another network device is another base station, another CU, or another DU, the communication unit 1300 may communicate with the another base station, the another CU, or the another DU (receiving and/or sending of a signal or information). For another example, when the network device 110 is a base station, a CU, or a DU, and the another network device is a core network, the communication unit 1300 may communicate with the core network (receiving and/or sending of a signal or information).

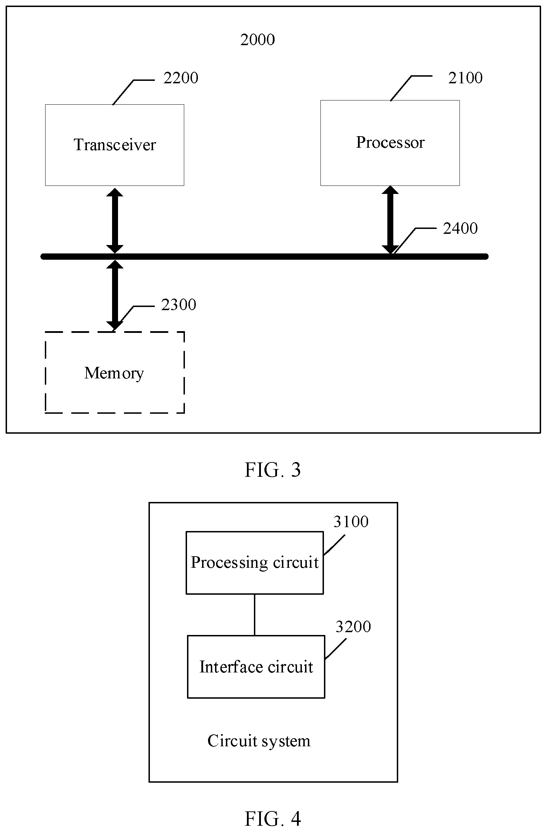

FIG. 3 is a schematic block diagram of another communication apparatus 2000 according to an embodiment of this application. As shown in FIG. 3, the communication apparatus 2000 may include one or more processors 2100 (only one processor is shown in FIG. 3), and may further include a transceiver 2200.

The communication apparatus 2000 may be used as the network device 110 or an apparatus used in the network device 110. Alternatively, the communication apparatus 2000 may be used as the terminal device 120 or an apparatus used in the terminal device 120.

Specifically, a function of the processing unit 1100 in the communication apparatus 1000 may be implemented by the one or more processors 2100. A function of the transceiver unit 1200 in the communication apparatus 1000 may be implemented by the transceiver 2200. The transceiver 2200 may be configured to communicate with another device/apparatus by using a transmission medium.

In each implementation of the communication apparatus 2000 shown in FIG. 3, the transceiver 2200 may include a receiver and a transmitter. The receiver is configured to perform a function (or an operation) of receiving, and the transmitter is configured to perform a function (or an operation) of transmitting.

The communication apparatus 2000 may further include one or more memories 2300, and is configured to store program instructions and/or data. The memory 2300 is coupled to the processor 2100. The coupling in this embodiment of this application is an indirect coupling or a communication connection between apparatuses or units in an electrical form, a mechanical form, or another form, and is used for information exchange between the apparatuses or the units. The processor 2100 may cooperate with the memory 2300. The processor 2100 may execute the program instructions stored in the memory 2300. Optionally, at least one of the one or more memories may be included in the processor.

A specific connection medium among the processor 2100, the transceiver 2200, and the memory 2300 is not limited in this embodiment of this application. In an example shown in FIG. 3, the processor 2100, the transceiver 2200, and the memory 2300 are connected by using a bus 2400. The bus is represented by a bold line. A connection manner between other components is merely an example for description, and is not limited thereto. The bus may be categorized as an address bus, a data bus, a control bus, or the like. For ease of representation, only one bold line is used to represent the bus in FIG. 3, but this does not indicate that there is only one bus or only one type of bus.

It may be understood that when the communication apparatus shown in FIG. 3 is a network device, the network device may further have more units, components, or the like than those in FIG. 3. It may also be understood that when the communication apparatus shown in FIG. 3 is a terminal device, the terminal device may further have more components or the like than those in FIG. 3. This is not limited in this embodiment of this application.

It may be understood that when the communication apparatus shown in FIG. 3 is the network device, the foregoing units or components may be located in one physical entity, or may be located in different physical entities. This is not limited in this embodiment of this application.

FIG. 4 is a schematic block diagram of a circuit system 3000 according to an embodiment of this application. As shown in FIG. 4, a network device may include a processing circuit 3100 and an interface circuit 3200.

The circuit system 3000 may be used as the network device 110 or an apparatus used in the network device 110. Alternatively, the circuit system 3000 may be used as the terminal device 120 or an apparatus used in the terminal device 120. In this case, the processing unit 1100 may be implemented by using the processing circuit 3100, and the transceiver unit 1200 may be implemented by using the interface circuit 3200. The processing circuit 3100 may be a chip, a logic circuit, an integrated circuit, a system on chip (system on chip, SoC) chip, or the like. The interface circuit 3200 may be a communication interface, an input/output interface, or the like.

In this embodiment of this application, the processor 2100 or the processing circuit 3100 may be a general-purpose processor, a digital signal processor, an application-specific integrated circuit, a field programmable gate array, another programmable logic device, a discrete gate or transistor logic device, a discrete hardware component, or the like, and may implement or perform the methods, steps, and logical block diagrams provided in embodiments of this application. The general-purpose processor may be a microprocessor or any conventional processor or the like. The steps of the methods provided with reference to embodiments of this application may be directly executed and accomplished by a hardware processor, or may be executed and accomplished by using a combination of hardware and software modules in the processor.

The following describes the method provided in embodiments of this application with reference to the foregoing communication apparatus and communication system.

Before the method in embodiments of this application is described, some technical terms related to embodiments of this application are first described.

1. Sensing signal: A signal used to sense a target or detect a target, or a signal used to sense environment information or detect environment information. For example, the sensing signal is an electromagnetic wave that is sent by a network device and that is used to sense the environment information. The sensing signal may also be referred to as a radar signal, a radar sensing signal, a sounding signal, a radar sounding signal, an environment sensing signal, or the like. This is not limited in embodiments of this application.

2. Echo signal: An electromagnetic feedback signal generated after an electromagnetic wave is transmitted, scattered, and reflected by a sensed target.

3. Sensed target: The sensed target may include a tangible object that can be sensed on the ground, for example, a ground object, for example, a mountain, a forest, or a building, and may further include a movable object, for example, a vehicle, an unmanned aerial vehicle, a pedestrian, or a terminal device. The sensed target is a target that can be sensed by a network device having the sensing function, and the target may feed an electromagnetic wave back to the network device. The sensed target may also be referred to as a detected target, a sensed object, a detected object, a sensed device, or the like. This is not limited in embodiments of this application.

4. Resource (resource): A radio resource, including a time domain resource, a frequency domain resource, a code domain resource, or the like.

5. Resource element (resource element, RE): A resource element with a minimum granularity. One resource element includes one time domain symbol (referred to as a symbol for short in embodiments of this application) in time domain and one subcarrier in frequency domain, and may be uniquely identified by using an index pair $(k, 1)$, where $k$ is a subcarrier index, and $1$ is a symbol index.

6. Time domain symbol (symbol): Also referred to as a symbol. The time domain symbol may be an orthogonal frequency division multiplexing (orthogonal frequency division multiplexing, OFDM) symbol, or a symbol in another multiple access manner. This is not limited in embodiments of this application. For different subcarrier spacings, lengths of the time domain symbol may be different.

7. Slot (slot): One slot includes N symbols, where N is a positive integer. For example, in an NR system, for a normal cyclic prefix (normal cyclic prefix, NCP), N may be equal to 14, and for an extended CP (extended cyclic prefix, ECP), N is equal to 12. When the solution in embodiments of this application is applied to another system, N may alternatively be another value. For different subcarrier spacings, lengths of one slot may be different. For example, when a subcarrier spacing is 15 kHz and a CP is the NCP, one slot is 1ms (millisecond) and includes 14 symbols. A value of the subcarrier spacing is not limited in embodiments of this application.

8. Physical channel (physical channel): The physical channel carries a signal or information. For example, the physical channel may be a physical downlink shared channel (physical downlink shared channel, PDSCH), a physical downlink control channel (physical downlink control channel, PDCCH), a physical broadcast channel (physical broadcast channel, PBCH), a physical sidelink shared channel (physical sidelink shared channel, PSSCH), a physical sidelink control channel (physical sidelink control channel, PSCCH), a physical sidelink broadcast channel (physical sidelink broadcast channel, PSBCH), a physical sidelink feedback channel (physical sidelink feedback channel, PSFCH), a physical uplink shared channel (physical uplink shared channel, PUSCH), a physical uplink control channel (physical uplink control channel, PUCCH), or the like. For a subsequent evolved networking form, a new physical channel name may be introduced. This is not limited in embodiments of this application.

9. Reference signal (reference signal, RS): The reference signal may be used for physical channel demodulation, channel measurement, interference measurement, synchronization tracking, or the like. The reference signal may be a demodulation reference signal (demodulation reference signal, DMRS), a channel state information reference signal (channel state information reference signal, CSI-RS), a sounding reference signal (sounding reference signal, SRS), a phase-tracking reference signal (phase-tracking reference signal, PT-RS), a primary synchronization signal (primary synchronization signal, PSS), or a secondary synchronization signal (secondary synchronization signal, SSS). The DMRS is used to demodulate a physical channel. For example, the network device or the terminal device performs channel estimation based on the DMRS, and then demodulates the physical channel based on an estimated channel value. The CSI-RS is used to obtain channel state information. For example, the network device sends the CSI-RS to the terminal device, the terminal device obtains channel state information CSI based on measurement of the CSI-RS, and feeds back the CSI to the network device, and the network device schedules the terminal device based on the CSI. Certainly, the reference signal may alternatively be another type of reference signal, or a reference signal having another function.

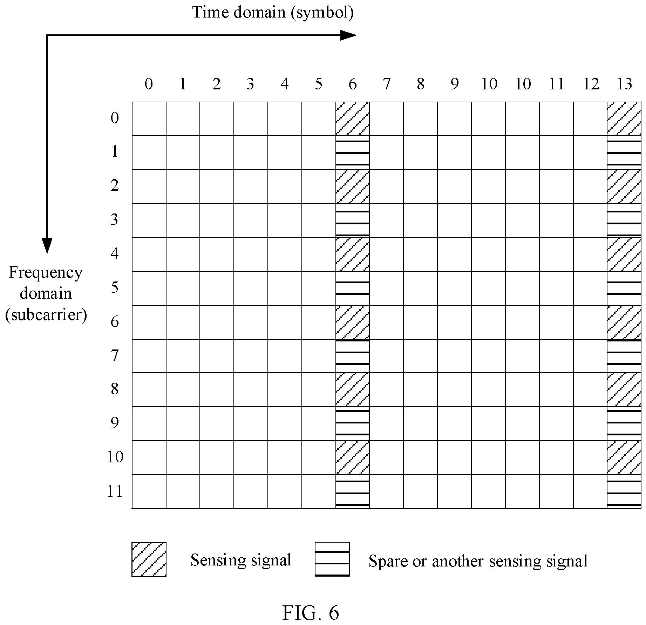

In a harmonized communication and sensing system, to improve sensing performance and reduce overheads of sensing signals, the sensing signals are generally sent in a discontinuous manner in time domain. FIG. 6 shows an example of distribution of a sensing signal in one slot. In FIG. 6, the sensing signal occupies symbols 6 and 13. In another symbol, the network device may be used to transmit data, control information, a reference signal, and the like to one or more terminal devices. It may be understood that the sensing signals may be distributed in other symbols in one slot, such as symbols 5 and 14, symbols 3, 4, 9, and 10, or symbols 3, 6, and 13. A symbol occupied by the sensing signals in one slot is not specifically limited in embodiments of this application.

By sending the sensing signal by using nonconsecutive time domain resources, the network device may detect the sensed target when small system overheads are occupied. For example, the network device may estimate a Doppler shift of the sensed target, and may further estimate a moving speed and the like of the sensed target. In addition, to further fully use resources occupied by the sensing signal, the sensing signal may be downlink data sent by the network device to one or some terminal devices, and may further include a reference signal for demodulating the downlink data. For example, the sensing signal may be a PDSCH of one or some terminal devices, and a DMRS for demodulating the PDSCH. When the downlink data is unicast data, the sensing signal may be a PDSCH sent to one terminal device. When the downlink data is multicast data, the sensing signal may be a PDSCH sent to a group of terminal devices. Generally, the group of terminal devices may include a plurality of terminal devices, and the group of terminal devices each receive information carried on the PDSCH.

When sending downlink data to the one or more terminal devices, the network device may send downlink control information (downlink control information, DCI) by using the PDCCH. The DCI carries time-frequency domain resource information used for sending the downlink data, that is, the time-frequency domain resource information used for transmitting the PDSCH. Generally, the PDSCH is located in one slot in time domain, and occupies one or more symbols. Correspondingly, time domain resource allocation information carried in the DCI may include an index S of a start symbol for transmitting the PDSCH in the slot and a quantity L of consecutive symbols. Specifically, S represents an index of a first symbol for transmitting the PDSCH in the current slot. As described above, for the NCP, one slot has 14 symbols, and an index value may range from 0 to 13. For the ECP, one slot has 12 symbols, and an index value may range from 0 to 12. L represents L consecutive symbols counted from an index of a start symbol. It may be understood that there is a specific constraint on values of S and L. For example, when the NCP is used, S+L is less than or equal to 14.

In an implementation, a plurality of combinations of S and L may be specified in a protocol, and each combination forms one piece of time domain resource allocation information. The network device sends one of the combinations to the terminal device by using the DCI. Table 1 shows a possible combination of S and L included in the time domain resource allocation information in the DCI when the NCP is used. As shown in Table 1, when a row index carried in the DCI is 1, correspondingly, S=2 and L=12; or when a row index carried in the DCI is 2, correspondingly, S=3 and L=11, and the like. Details are not described again.

**Table 1**

| Row index (Row index) | S | L |
|---|---|---|
| 1 | 2 | 12 |
| | 3 | 11 |
| 2 | 2 | 10 |
| | 3 | 9 |
| 3 | 2 | 9 |
| | 3 | 8 |
| 4 | 2 | 7 |
| | 3 | 6 |
| 5 | 2 | 5 |
| | 3 | 4 |
| 6 | 9 | 4 |
| | 10 | 4 |
| 7 | 4 | 4 |
| | 6 | 4 |
| 8 | 5 | 7 |
| 9 | 5 | 2 |
| 10 | 9 | 2 |
| 11 | 12 | 2 |
| 12 | 1 | 13 |
| 13 | 1 | 6 |
| 14 | 2 | 4 |
| 15 | 4 | 7 |
| 16 | 8 | 4 |

In another implementation, a possible combination of S and L may be semi-statically configured by using signaling. For example, one or more combinations of S and L are notified by using radio resource control (radio resource control, RRC) signaling. One combination of S and L is referred to as a start and length indicator (start and length indicator, SLIV), that is, one SLIV value that is corresponding to one S and one L. Then, the network device sends information of one of the SLIVs to the terminal device by using the DCI, and the terminal device obtains S and L based on a correspondence between the SLIV and each of S and L.

Specifically, for the NCP, the SLIV may have the following relationship with S and L:
when L - 1 ≤ 7, SLIV = 14 * (L - 1) + S; otherwise, SLIV = 14 * (14 - L + 1) + (14 - 1 - S).

In addition, a combination of values of S and L should also satisfy a specific constraint relationship, for example, for the NCP, S + L ≤ 14, and for the ECP, S + L ≤ 12.

For example, when SLIV=20, it is known that S=6 and L=2. It may be understood that, although S=6 and L=14 also satisfy the correspondence between the SLIV and each of S and L, because S+L is greater than 14, S+L is not a valid value.

Time domain resources notified by the network device by using the combinations of S and L can be only consecutive time domain resources. However, the sensing signal sent by the network device is discontinuous in time domain (as shown in FIG. 2). Therefore, the foregoing manner of notifying the combination of S and L affects resource utilization in the harmonized communication and sensing system. For example, to notify a plurality of discontinuous time domain sub-resources, a plurality of pieces of DCI may be needed, increasing signaling overheads and affecting resource utilization.

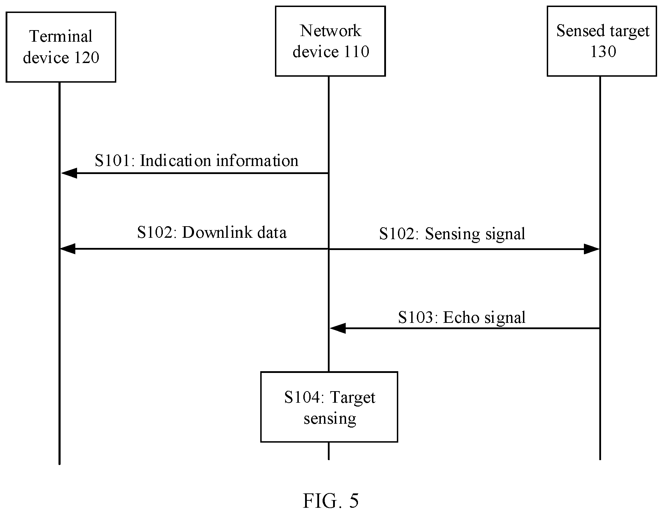

FIG. 5 is a schematic flowchart of a communication method according to an embodiment of this application. In this embodiment of this application, the network device indicates discontinuous time domain sub-resources by using indication information to send the PDSCH. The PDSCH or a signal carried on the PDSCH may be used as the sensing signal to sense a target device. This method may improve resource utilization of the harmonized communication and sensing system. Specifically, new DCI is designed to notify the foregoing discontinuous time domain sub-resources, so that overheads of using the DCI may be reduced, and resource utilization of a control channel may be improved. Further, a signal carried by the PDSCH is used as the sensing signal, to improve resource utilization of a data channel. Further, the sensing signal is sent by using discontinuous time domain resources, so that time domain resources occupied by the sensing signal may be reduced, and resource utilization may be improved. In addition, time domain resource allocation may be more flexible by using the newly designed DCI.

In the following method, a sensed target 130 and a terminal device 120 may be the same or may be different. This is not limited in embodiments of this application.

In the following method, steps of the network device may be implemented by different functional entities included in the network device. In other words, the functional entities that perform the steps of the network device may be located in different physical entities. For example, a sending or receiving operation of the network device may be located in a radio frequency (radio frequency, RF) unit, a radio remote unit (radio remote unit, RRU), or an active antenna unit (active antenna unit, AAU) of the network device. An operation processed by the network device may be located in a central unit CU of the network device, or the like. This is not limited in this application.

Specifically, the method may include the following steps.

S101: A network device 110 sends the indication information to the terminal device 120, and correspondingly, the terminal device 120 receives the indication information from the network device 110.

Specifically, the indication information may include time domain resource allocation information. The time domain resource allocation information indicates a first time domain resource.

It may be understood that, in embodiments of this application, the indication information may be carried in physical layer signaling, for example, downlink control information DCI for more dynamic and flexible notification of the first time domain resource, or may be carried in higher layer signaling for more reliable notification of the first time domain resource. This is applicable to a scenario in which the first time domain resource changes slowly.

Alternatively, the indication information may be transmitted by using a combination of the physical layer signaling and the higher layer signaling. For example, the network device 110 configures a plurality of candidate time domain resources by using the higher layer signaling. The plurality of candidate time domain resources include the first time domain resource. At least one of the plurality of candidate time domain resources may include at least two time domain sub-resources, and each candidate time domain resource is corresponding to one index. Then, the network device notifies an actually used time domain resource, for example, the first time domain resource, by using the physical layer signaling. Specifically, an index corresponding to the first time domain resource may be carried in the DCI to indicate the first time domain resource. This improves signaling transmission reliability, reduces signaling overheads, and delivers flexibility. The higher layer signaling may be an RRC message or a media access control (media access control, MAC) control element (control element, CE). The RRC message may include a dedicated RRC message or a broadcast/multicast RRC message. This is not limited in this embodiment of this application.

Alternatively, the indication information may be embodied by using a combination of at least two of the physical layer signaling, the higher layer signaling, and protocol fixation. For example, a part of information included in the indication information is carried in the physical layer signaling, and another part of the information is carried in the higher layer signaling. For another example, a part of information included in the indication information is carried in the physical layer signaling, and another part of the information is fixed in a protocol. For another example, a part of information included in the indication information is carried in the physical layer signaling, another part of the information is carried in the higher layer signaling, and still another part of the information is fixed in a protocol. For explanations of the higher layer signaling and the physical layer signaling, refer to the foregoing descriptions. Details are not described again. The following provides detailed descriptions with reference to content specifically included in the indication information.

Specifically, the first time domain resource may be located in one slot. In embodiments of this application, the slot is referred to as a first slot. For descriptions of the slot, refer to the foregoing descriptions. Details are not described herein again. The first time domain resource includes M time domain sub-resources, at least two adjacent time domain sub-resources in the M time domain sub-resources are at an interval of a first time period, and M is an integer greater than or equal to 2. It may be understood that in embodiments of this application, two adjacent time domain sub-resources are adjacent in time domain, and there is no another time domain sub-resource between the two adjacent time domain sub-resources. For example, assuming that M=3, and the M time domain sub-resources occupy symbols 3 (a first time domain sub-resource), 6 (a second time domain sub-resource), and 13 (a third time domain sub-resource) in the first slot, the first time domain sub-resource and the second time domain sub-resource are adjacent time domain sub-resources, the second time domain sub-resource and the third time domain sub-resource are adjacent time domain sub-resources, but the first time domain sub-resource and the third time domain sub-resource are not adjacent time domain sub-resources (there is the second time domain sub-resource in between).

FIG. 6 shows an example of the first slot. As shown in FIG. 6, the first slot includes N=14 symbols (corresponding indexes are 0 to 13), and the first time domain resource is one time domain sub-resource on the symbol 6 and one time domain sub-resource on the symbol 13, that is, M=2. It may be understood that a time unit may be one symbol (for example, an OFDM symbol), X symbols, or a period of time, for example, 0.07 milliseconds (millisecond, ms) or the like. This is not limited in this embodiment of this application. It may be understood that the first slot may include another quantity of symbols. For example, the first slot includes 12 symbols. This is not limited in this embodiment of this application. It may be understood that the first time domain resource may be distributed in other symbols in the first slot, such as symbols 5 (the first time domain sub-resource) and 14 (the second time domain sub-resource), symbols 3 and 4 (the first time domain sub-resource), and 9 and 10 (the second time domain sub-resource), or symbols 3 (the first time domain sub-resource), 6 (the second time domain sub-resource), and 13 (the third time domain sub-resource). Distribution of the first time domain resource in the first slot is not specifically limited in this embodiment of this application.

It may be understood that the at least two adjacent time domain sub-resources in the M time domain sub-resources are at an interval of the first time period. The first time period may include one or more time units. For example, when the time unit is a symbol, the first time period may be one symbol (for example, an OFDM symbol), X symbols, a period of time, for example, 0.07 milliseconds (millisecond, ms), one or more mini-slots, or one or more slots. This is not limited in this embodiment of this application.

In the following descriptions, an example in which the time unit is a symbol is used for description.

Alternatively, the first time domain resource may be located in different slots. For example, when M=4, the first two time domain sub-resources included in the first time domain resource are located on symbols 6 (the first time domain sub-resource) and 13 (the second time domain sub-resource) in a slot N, and the last two time domain sub-resources are located on symbols 4 (the third time domain sub-resource) and 11 (a fourth time domain sub-resource) in a slot N+1. A position of the first time domain resource is not limited in this embodiment of this application.

It may be understood that this step is optional for the network device 110 and the sensed target 130. For the network device 110 and the terminal device 120, this step is optional if a type of first time domain resource distribution information is specified in a protocol. To be specific, both the network device 110 and the terminal device 120 perform downlink data transmission based on the first time domain resource distribution information specified in the protocol.

In step S101, an operation performed by the network device 110 may be performed by the processing unit 1100, the processor 2100, or the processing circuit 3100 of the communication apparatus (used as a network device) by using the transceiver unit 1200, the transceiver 2200, or the interface circuit 3200 of the communication apparatus (used as a network device). Correspondingly, an operation performed by the terminal device 120 may be performed by the processing unit 1100, the processor 2100, or the processing circuit 3100 of the communication apparatus (used as a terminal device) by using the transceiver unit 1200, the transceiver 2200, or the interface circuit 3200 of the communication apparatus (used as a network device).

S102: The network device 110 sends the physical downlink shared channel PDSCH to the terminal device 120 on the first time domain resource.

The PDSCH or some or all signals carried by the PDSCH may be used as the sensing signal. In other words, the sensing signal is a physical downlink shared channel PDSCH carried on the first time domain resource, or the sensing signal is some or all signals carried by the PDSCH. In other words, a signal on a time-frequency resource occupied by the PDSCH may be used as the sensing signal. In other words, a signal on a time-frequency resource occupied by the PDSCH and a pilot signal associated with the PDSCH may be used as the sensing signal, where the pilot signal associated with the PDSCH may be a DMRS used to demodulate the PDSCH, or a phase tracking reference signal (phase tracking reference signal, PTRS) used for phase tracking.

It should be noted that FIG. 5 shows two steps S102, which does not mean that the network device 110 needs to perform S102 twice to separately send the sensing signal and the downlink data. Instead, in S102 performed by the network device 110, the downlink data is sent to the terminal device 120, and the sensing signal is sent to the sensed target 130.

Correspondingly, the terminal device 120 receives, based on the indication information, the PDSCH (the downlink data) on the first time domain resource.

It may be understood that, in this embodiment of this application, the PDSCH sent on the first time domain resource is used to transmit one redundancy version (redundancy version, RV) of one transport block (transport block, TB). To be specific, the TB is transmitted on all the M time domain sub-resources, instead of separately transmitting the TB or a plurality of RVs of the TB on each time domain sub-resource.

It may be understood that the downlink data may be downlink data (the PDSCH) sent by the network device to one or more terminal devices. This is not limited in this embodiment of this application. For example, the downlink data may be multicast/broadcast data. Specifically, the multicast/broadcast data may be a video, a dynamic layer, road safety information, or the like.

In step S102, an operation performed by the network device 110 may be performed by the processing unit 1100, the processor 2100, or the processing circuit 3100 of the communication apparatus (used as a network device) by using the transceiver unit 1200, the transceiver 2200, or the interface circuit 3200 of the communication apparatus (used as a network device). Correspondingly, an operation performed by the terminal device 120 may be performed by the processing unit 1100, the processor 2100, or the processing circuit 3100 of the communication apparatus (used as a terminal device) by using the transceiver unit 1200, the transceiver 2200, or the interface circuit 3200 of the communication apparatus (used as a network device).

S103: The network device 110 receives all or some echo signals of PDSCH.

In this embodiment of this application, the sensed target 130 is referred to as a first target.

Specifically, the network device 110 receives echo signals of the all or some signals carried by the PDSCH. To be specific, the network device receives an echo signal of the sensed target 130 for the sensing signal. The echo signal is used to sense the sensed target 130. In other words, the sensing signal is transmitted, scattered, and reflected by the sensed target 130 to generate an electromagnetic feedback signal, namely, the echo signal. There may be one or more sensed targets 130. This is not limited in this embodiment of this application.

In step S102, an operation performed by the network device 110 may be performed by the processing unit 1100, the processor 2100, or the processing circuit 3100 of the communication apparatus (used as a network device) by using the transceiver unit 1200, the transceiver 2200, or the interface circuit 3200 of the communication apparatus (used as a network device).

S104: The network device 110 senses the first target (the sensed target 130).

Specifically, the network device 110 senses the first target based on all or some of the received echo signals of the PDSCH.

For example, the network device 110 obtains, based on the sensing signal and the echo signal of the sensing signal, a sensing result of the first target, for example, a distance or an angle between the first target and the network device, or positions, moving speeds, outline dimensions, or the like of the first target and the network device. In this way, the network device 110 may further utilize the sensing result to assist communication, improving communication quality.

In this embodiment of this application, the network device 110 uses a self-sending and selfreceiving mechanism. After sending the sensing signal, the network device 110 receives and processes the echo signal of the sensing signal. For example, when the network device sends the sensing signal at a moment t, and receives the echo signal at a moment t+k, a distance of the sensed target may be estimated to be approximately $((t+k)-t)*c/2$, where c represents a speed of light.

In step S104, an operation performed by the network device 110 may be performed by the processing unit 1100, the processor 2100, or the processing circuit 3100 of the communication apparatus (used as a network device).

Step S104 is optional.

It should be noted that S101 may be performed before S102, or S102 may be performed before S101. This is not limited in this embodiment of this application.

In this embodiment of this application, new DCI is designed to notify the foregoing discontinuous time domain sub-resources, so that overheads of using the DCI may be reduced, and resource utilization may be improved. Further, a signal carried by the PDSCH is used as the sensing signal, to improve resource utilization. Further, the sensing signal is sent by using discontinuous time domain resources, so that time domain resources occupied by the sensing signal may be reduced, and resource utilization may be improved. In addition, time domain resource allocation may be more flexible by using the newly designed DCI.

Based on the foregoing embodiments, the following embodiments show specific implementations of the indication information. For terms and descriptions that are the same between the following embodiments and those in the foregoing embodiments, to reduce repetition, reference may be made to each other unless otherwise specified.

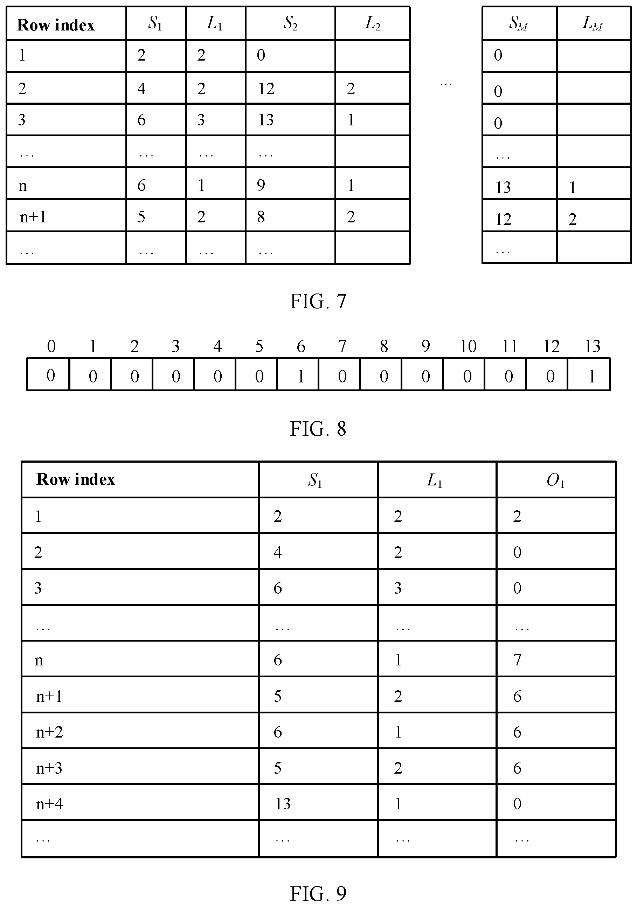

FIG. 7 shows an implementation of indication information. The indication information may be included in downlink control information DCI. As shown in FIG. 7, the DCI includes start position information $S_i$ of each of M time domain sub-resources and duration information $L_i$ of each of the M time domain sub-resources, where i represents an $i^{th}$ time domain sub-resource, i is a positive integer and $1 \leq i \leq M$, and M is an integer greater than or equal to 2.

Refer to FIG. 7. If M=2, the indication information includes time domain resource allocation information $\{S_1, L_1\}$, and $\{S_2, L_2\}$. For example, when a row index is 2, the corresponding $\{S_1, L_1\}$ is {4,2}, indicating that a start position of a first time domain sub-resource is a symbol 4 and duration is two symbols, and the corresponding $\{S_2, L_2\}$ is {12, 2}, indicating that a start position of a second time domain sub-resource is a symbol 12 and duration is two symbols. For another example, when a row index is 3, the corresponding $\{S_1, L_1\}$ is {6, 3}, indicating that a start position of a first time domain sub-resource is a symbol 6 and duration is three symbols, and the corresponding $\{S_2, L_2\}$ is {13, 1}, indicating that a start position of a second time domain sub-resource is a symbol 13 and duration is one symbol.

It may be understood that, in this embodiment of this application, the first time domain sub-resource is an earliest time domain sub-resource in the first slot in time domain.

Still refer to FIG. 7. If M=3, the indication information includes time domain resource allocation information $\{S_1, L_1\}$, $\{S_2, L_2\}$, and $\{S_3, L_3\}$. For example, when a row index is n, the corresponding $\{S_1, L_1\}$ is {6, 1}, indicating that a start position of a first time domain sub-resource is a symbol 6 and duration is one symbol, the corresponding $\{S_2, L_2\}$ is {9, 1}, indicating that a start position of a second time domain sub-resource is a symbol 9 and duration is one symbol, and the corresponding $\{S_3, L_3\}$ is {13, 1}, indicating that a start position of a third time domain sub-resource is a symbol 13, and duration is one symbol. For another example, when a row index is n+1, the corresponding $\{S_1, L_1\}$ is {5, 2}, indicating that a start position of a first time domain sub-resource is a symbol 5 and duration is two symbols, the corresponding $\{S_2, L_2\}$ is {8, 2}, indicating that a start position of a second time domain sub-resource is a symbol 8 and duration is two symbols, and the corresponding $\{S_3, L_3\}$ is {12, 2}, indicating that a start position of a third time domain sub-resource is a symbol 12 and duration is two symbols.

FIG. 7 shows only cases in which M=2 and M=3. It may be understood that M may be another value. This is not limited in this application.

In an implementation, combinations of time domain resource allocation information $\{S_i, L_i\}$, $i \in [1, M]$ that is corresponding to different M values may share a time domain resource allocation table shown in FIG. 7, where "i ∈ [1, M]" indicates that a value of i may range from 1 to M. In this case, the row index is uniformly encoded in time domain resource allocation information corresponding to a plurality of M values. For example, both M=2 and M=3 use the table in FIG. 7. Further, M=1 may share the table shown in FIG. 7 with M=2 and M=3. In the table shown in FIG. 7, when $S_i$ = 0, it indicates that the $i^{th}$ time domain sub-resource does not exist, or indicates that the $i^{th}$ to an $M^{th}$ time domain sub-resources do not exist, or in other words, the $i^{th}$ time domain sub-resource is not indicated in the indication information, or in other words, the $i^{th}$ to an $M^{th}$ time domain sub-resources are not indicated in the indication information. For example, when a row index is 1, $S_2$ = 0 indicates that a second time domain sub-resource does not exist, or indicates that a second to the $M^{th}$ time domain sub-resources do not exist. It may be understood that, when $S_i$ = 0, it may further be understood that a value of M corresponding to the row index is actually i-1. For example, in FIG. 7, $S_2$ = 0 corresponding to the row index 2 may be understood as M=1. When the indication information is included in the DCI, the DCI may carry one row index to indicate a first time domain resource. The indication information of this method may process time domain resources with different M values together, simplifying a processing process.

In another implementation, combinations of time domain resource allocation information $\{S_i, L_i\}$, i ∈ [1, M] that is corresponding to different M values may be corresponding to different tables. For example, time domain resource allocation information corresponding to M=1 is corresponding to a first table, time domain resource allocation information corresponding to M=2 is corresponding to a second table, and time domain resource allocation information corresponding to M=3 is corresponding to a third table. In this case, the indication information may include information of a used table and a row index in the corresponding table, to indicate start position information and duration information of the M time domain sub-resources. Further, the information of the used table may be indicated by using higher layer signaling, and information of the row index in the corresponding table may be indicated by using physical layer signaling. For a specific signaling form, refer to the foregoing descriptions. Details are not described again. This implementation may reduce overheads of the physical layer signaling.

Alternatively, the indication information shown in FIG. 7 may be transmitted by using the higher layer signaling. For example, an RRC message carries one combination of time domain resource allocation information $\{S_i, L_i\}$, i ∈ [1, M]. For example, the carried time domain resource allocation information is $\{S_1, L_1\}$, and $\{S_2, L_2\}$, or the carried time domain resource allocation information is $\{S_1, L_1\}$, $\{S_2, L_2\}$, and $\{S_3, L_3\}$, or a plurality of SLIVs are carried, where different SLIVs are associated with different $\{S_i, L_i\}$. For example, SLIV1 is associated

with $\{S_1, L_1\}$, and SLIV2 is associated with $\{S_2, L_2\}$. A terminal side may determine corresponding $\{S_i, L_i\}$ based on the SLIV A specific indication manner is similar to that when the indication information is the DCI, and details are not described again. Reliability of the indication information may be enhanced by using higher layer signaling for transmission.

Alternatively, the indication information in FIG. 7 may be embodied by using a combination of at least two of the physical layer signaling, the higher layer signaling, and protocol fixation. For example, $\{S_i\}$ is transmitted in the physical layer signaling, and $\{L_i\}$ is fixed in the higher layer signaling or a protocol, or vice versa. This solution may further reduce signaling overheads of the DCI and enhance reliability of the indication information.

It should be noted that, in the same time domain resource allocation information, symbols corresponding to different $\{S_i, L_i\}$ may not have a sequence, but generally, different $\{S_i, L_i\}$ is corresponding to different symbols, and does not overlap. This may ensure that fewer row indexes are used to set a table and reduce signaling overheads.

In the implementation shown in FIG. 7, the indication information provides more complete information, and resource scheduling is more flexible. To be specific, start position information and length information of different time domain sub-resources may be flexibly indicated.

FIG. 8 shows another implementation of indication information. The indication information may be included in higher layer signaling, for example, an RRC message, or may be included in physical layer information, for example, DCI. The indication information indicates M time domain sub-resources included in a first time domain resource by using a bitmap (bitmap). Specifically, FIG. 8 shows that one slot (for example, a first slot) includes N=14 symbols, whose corresponding indexes are respectively 0 to 13. In this case, the indication information may include N=14 bits that are in a one-to-one correspondence with symbols 0 to 13. When a value of a bit in the indication information is 1, it indicates that a symbol corresponding to the bit belongs to the first time domain resource, and may be used to transmit a sensing signal (downlink data). When a value of a bit in the indication information is 0, it indicates that a symbol corresponding to the bit does not belong to the first time domain resource. To be specific, the M time domain sub-resources in the first time domain resource include a symbol corresponding to a bit value 1, but do not include a symbol corresponding to a bit value 0. It may be understood that when values of a plurality of consecutive bits are 1, symbols corresponding to the plurality of consecutive bits may belong to one time domain sub-resource, and when values of discontinuous bits are 1, corresponding symbols belong to different time domain sub-resources. As shown in FIG. 8, values of bits in the bitmap are 00000010000001, indicating that the first time domain resource includes two time domain sub-resources (a first time domain sub-resource corresponding to a symbol 6 and a second time domain resource corresponding to a symbol 13). For another example, values of bits in the bitmap are 00000110000001 (not shown in FIG. 8), indicating that the first time domain resource includes two time domain sub-resources (a first time domain sub-resource corresponding to symbols 6 and 7 and a second time domain resource corresponding to symbol 13). By using the bitmap, allocation of the first time domain resource may be more flexible. In the implementation shown in FIG. 7, resource scheduling is more flexible. To be specific, the bitmap may flexibly indicate start position information and length information of different time domain sub-resources, so that time domain resources are more effectively used, and communication performance is improved.

FIG. 9 shows another implementation of indication information. In this implementation, compared with the implementations shown in FIG. 7 and FIG. 8, signaling overheads may be further reduced.

As shown in FIG. 9, the indication information may be included in physical layer signaling, for example, DCI. The indication information may include at least one of start position information $S_1$ of a first time domain sub-resource in M time domain sub-resources, duration information $L_1$ of the first time domain sub-resource, and an offset $O_1$ of the first time domain sub-resource. There is a first association relationship between start position information $S_i$ of an $i^{th}$ time domain sub-resource in the M time domain sub-resources and at least one of $S_1$, $L_1$, and $O_1$, Alternatively, start position information $S_i$ of an $i^{th}$ time domain sub-resource in the M time domain sub-resources is determined based on at least one of $S_1$, $L_1$, and $O_1$,

In an implementation, the first association relationship between $S_i$ and $S_1$ may include: $S_i = n * S_1$, or $S_i = i * S_1$, and duration information $L_i$ of the $i^{th}$ time domain sub-resource satisfies $L_i = L_1$, where i is an integer greater than or equal to 2 and less than or equal to M.

In another implementation, the first association relationship between $S_i$ and $L_1$ may include: $S_i = n * L_1 + 1$, where n is a positive integer.

In another implementation, the first association relationship between $S_i$ and $O_1$ may include: $S_i = n * O_1$, where n is a positive integer.

In another implementation, the first association relationship between $S_i$ and each of $S_1$ and $O_1$ may include:
$S_i = S_{i-1} - 1 + O_1$, or $S_i = S_{i-1} + O_1$, where n is a positive integer; and duration information $L_i$ of the $i^{th}$ time domain sub-resource satisfies $L_i = L_1$, where i is an integer greater than or equal to 2 and less than or equal to M. Further, $O_1$ is greater than $L_1$.

In another implementation, the first association relationship may include:
$S_i = S_{i-1} + L_1 - 1 + O_1$, and duration information $L_i$ of the $i^{th}$ time domain sub-resource satisfies $L_i = L_1$, where i is an integer greater than or equal to 2 and less than or equal to M.

For example, when a row index is n, $\{S_1, L_1\}$ included in the indication information is $\{6, 1\}$, and $O_1$ is 7. Assuming that M=2, in addition to a time domain resource corresponding to a symbol 6, a first time domain resource indicated by the indication information further includes a symbol 13 ($S_i = S_{i-1} + L_1 - 1 + O_1 = 6+1-1+7$). For another example, when a row index is n+1, $\{S_1, L_1\}$ included in the indication information is $\{5, 2\}$, and $O_1$ is 7. Assuming that M=2, in addition to time domain resources corresponding to symbols 5 and 6, the first time domain resource indicated by the indication information further includes time domain resources corresponding to symbols 12 and 13 ($S_i = S_{i-1} + L_1 - 1 + O_1 = 5+2-1+6$). For another example, when a row index is 1, $\{S_1, L_1\}$ included in the indication information is $\{2, 2\}$, and $O_1$ is 2. Assuming that M=3, in addition to time domain resources corresponding to symbols 2 and 3, the first time domain resource indicated by the indication information further includes time domain resources corresponding to symbols 5 and 6 and time domain resources corresponding to symbols 8 and 9.

Similar to descriptions in FIG. 7, in an implementation, time domain resource allocation information $\{S_1, L_1, O_1\}$ corresponding to different M values may share the table shown in FIG. 9. In the table shown in FIG. 9, when $O_1 = 0$, it indicates that a second to an $M^{th}$ time domain sub-resources do not exist, or an $i^{th}$ to an $M^{th}$ time domain sub-resources are not indicated in the indication information. It may be understood that, when $O_1 = 0$, it may further be understood that a value of M corresponding to the row index is actually 1. For example, in FIG. 9, $O_1 = 0$ corresponding to the row index 2 may be understood as M=1. For related descriptions, refer to the foregoing descriptions corresponding to FIG. 7. The indication information of this method may process time domain resources with different M values together, simplifying a processing process.

In another implementation, combinations of time domain resource allocation information $\{S_1, L_1, O_1\}$ that is corresponding to different M values may be corresponding to different tables. In this case, the indication information may include information of a used table and a row index in the corresponding table, to indicate start position information and duration information of the M time domain sub-resources. Further, the information of the used table may be indicated by using higher layer signaling, and information of the row index in the corresponding table may be indicated by using physical layer signaling. For a specific signaling form, refer to the foregoing descriptions. Details are not described again. This implementation may reduce overheads of the physical layer signaling.

It may be understood that one or more of $S_1$, $L_1$, and $O_1$ may be included in the higher layer signaling or fixed in a protocol. For example, $S_1$ and $L_1$ are included in the DCI, and $O_1$ is included in RRC signaling. Alterna-

tively, $S_1$ is included in the DCI, and $L_1$ and $O_1$ are included in RRC signaling. Alternatively, $S_1$ is included in the DCI, $L_1$ is included in RRC signaling, and $O_1$ is fixed in a protocol or $O_1$ does not exist. This may further reduce overheads of the DCI and improve reliability of information transmission.

When $O_1$ is fixed in a protocol or $O_1$ does not exist, there may be several implementations.

In a first implementation, the start position information $S_i$ of the $i^{th}$ time domain sub-resource may satisfy $S_i = n * S_{i-1}$, where n is an integer greater than 1. For example, when n=3, M=2, $S_1 = 2$, and $L_1 = 1$, the first time domain sub-resource is a symbol 2, a second time domain sub-resource is a symbol 6 ($S_2 = 3 * S_1 = 6$, $L_2 = L_1 = 1$), and so on. In this case, signaling overheads may be further reduced.

In a second implementation, the start position information $S_i$ of the $i^{th}$ time domain sub-resource satisfies $S_i = n * S_{i-1} + L_1$, where n is an integer greater than 1. For example, when n=3, M=2, $S_1 = 2$, and $L_1 = 1$, the first time domain sub-resource is a symbol 2, a second time domain sub-resource is a symbol 7 ($S_2 = 3 * S_1 + L_1 = 7$, $L_2 = L_1 = 1$), and so on. In this case, signaling overheads may be further reduced.

In a third implementation, the start position information $S_i$ of the $i^{th}$ time domain sub-resource satisfies $S_i = n * S_1$, where n is an integer greater than 1. For example, when n = 3, M = 2, $S_1 = 2$, and $L_1 = 1$, a first time domain sub-resource is a symbol 2, and a second time domain sub-resource is a symbol 6 ($S_2 = 3 * S_1 = 6$, $L_2 = L_1 = 1$), and so on. For example, when n=3 and M=3, a first time domain sub-resource is a symbol 2, a second time domain sub-resource is a symbol 6 ($S_2 = 3 * S_1 = 6$, $L_2 = L_1 = 1$), and a third time domain sub-resource is a symbol 9 ($S_3 = 3 * S_1 = 9$, $L_2 = L_1 = 1$). In this case, signaling overheads may be further reduced.

Further, the indication information may further include an enable flag (enable flag). The enable flag is also referred to as first indication information in this embodiment of this application. When a value of the flag is 1 (a first value), the flag is used to indicate start positions and duration of the M time domain sub-resources. For a specific implementation, refer to the foregoing descriptions. When a value of the flag is 0 (a second value), the flag is used to indicate only a start position and duration of a first time domain sub-resource. To be specific, in this case, a time domain sub-resource other than the first time domain sub-resource is not indicated in the indication information. In other words, in this case, it is equivalent to M=1.

It may be understood that, for the several implementations when $O_1$ is fixed in a protocol or $O_1$ does not exist, $S_1$, $L_1$ and the first indication information may be included in the physical layer signaling, the higher layer signaling, or combination signaling thereof. For example, the DCI includes at least one of $S_1$, $L_1$, and the first indication information, and the remaining is included in the higher layer signaling, or is fixed in a protocol. For details, refer to the foregoing similar descriptions.

Alternatively, the indication information may include at least one of start position information $S_1$ of a first time domain sub-resource in the M time domain sub-resources, duration information $L_1$ of the first time domain sub-resource, and first indication information. There is a fourth association relationship between start position information $S_i$ of an $i^{th}$ time domain sub-resource of the M time domain sub-resources and at least one of $S_1$ and $L_1$. Alternatively, start position information $S_i$ of an $i^{th}$ time domain sub-resource in the M time domain sub-resources is determined based on at least one of $S_1$ and $L_1$. For the fourth association relationship, refer to the descriptions of the first association relationship in the preceding text. Details are not described herein again.

This embodiment of this application further provides another implementation of the indication information. A difference between this implementation and the implementation shown in FIG. 9 lies in that the indication information carries at least one of start position information $S_1$, duration information $L_i$, i $\in$ [1, M], and $O_1$ of the M time domain sub-resources. There is a second association relationship between start position information $S_i$ of the corresponding $i^{th}$ time domain sub-resource and at least one of $S_1$, $L_i$, and $O_1$, Alternatively, start position information $S_i$ of the $i^{th}$ time domain sub-resource may be determined based on at least one of $S_1$, $L_i$, and $O_1$,

In an implementation, the second association relationship between $S_i$ and $S_1$ may include: $S_i = n * S_1$, or $S_i = i * S_1$, where n is a positive integer; and duration information $L_i$ of the $i^{th}$ time domain sub-resource satisfies $L_i = L_1$, where i is an integer greater than or equal to 2 and less than or equal to M.

In another implementation, the first association relationship between $S_i$ and $L_i$ may include:

$$S_i = \sum_1^{i-1} L_j + 1$$, where j is a positive integer.

In another implementation, the first association relationship between $S_i$ and $O_1$ may include: $S_i = n * O_1$, where n is a positive integer.

In another implementation, the second association relationship between $S_i$ and each of $S_1$ and $L_i$ may include: $S_i = nS_1 + L_{i-1} - 1$, or $S_i = S_1 + nL_{i-1} - 1$, where n is a positive integer, and i is an integer greater than or equal to 2 and less than or equal to M.

In another implementation, the second association relationship between $S_i$ and each of $S_1$, $L_i$, and $O_1$ may include: $S_i = S_{i-1} + L_{i-1} - 1 + O_1$. For example, when M=2, $S_1 = 6$, $L_1 = 1$, $L_2 = 2$, and $O_1 = 2$, a first time domain sub-resource is a symbol 6, and a second time domain sub-resource is symbols 8 and 9. For example, when M=3, $S_1 = 6$, $L_1 = 1$, $L_2 = 2$, $L_3 = 1$, and $O_1 = 2$, a first time domain sub-resource is a symbol 6, a second time domain sub-resource is symbols 8 and 9, and a third time domain sub-resource is a symbol 11. For related descriptions, refer to the content corresponding to FIG. 9 and other content above. Details are not described again.

It may be understood that one or more of $S_1$, $L_i$, and $O_1$ may be included in the higher layer signaling or fixed in a protocol. For example, $S_1$ and $L_i$ are included in the DCI, and $O_1$ is included in RRC signaling. Alternatively, $S_1$ is included in the DCI, and $L_i$ and $O_1$ are included in RRC signaling. Alternatively, $S_1$ is included in the DCI, $L_i$ is included in RRC signaling, and $O_1$ is fixed in a protocol. This may further reduce overheads of the DCI and improve reliability of information transmission.

This embodiment of this application further provides another implementation of the indication information. A difference between this implementation and the implementation shown in FIG. 9 lies in that the indication information carries at least one of $S_1$, $L_1$, and an offset $O_i$ of an $i^{th}$ time domain sub-resource, where i E [2, M]. There is a third association relationship between start position information $S_i$ of the corresponding $i^{th}$ time domain sub-resource and at least one of $S_1$, $L_1$, and $O_i$. Alternatively, start position information $S_i$ of the $i^{th}$ time domain sub-resource may be determined based on at least one of $S_1$, $L_1$, and $O_i$.

In an implementation, for the third association relationship between $S_i$ and $S_1$, refer to the foregoing descriptions of the first association relationship or the second association relationship. Details are not described herein again.

In another implementation, the third association relationship between $S_i$ and each of $S_1$ and $O_i$ may include $S_i = (i - 1) * S_1 + O_i$, or $S_i = i * S_1 + O_i$, where n is a positive integer; and duration information $L_i$ of the $i^{th}$ time domain sub-resource satisfies $L_i = L_1$, where i is an integer greater than or equal to 2 and less than or equal to M. Further, $O_i$ is greater than $L_1$.

In another implementation, the third association relationship between $S_i$ and each of $S_1$, $L_1$, and $O_i$ may include: $S_i = S_{i-1} + L_1 - 1 + O_i$. For example, when M=2, $S_i$, $L_1$, and $S_1 = 6$, a first time domain sub-resource is a symbol 6, and a second time domain sub-resource is a symbol 8. For example, when M=3, $S_1 = 6$, $L_1 = 1$, $O_2 = 2$, and $O_3 = 1$, a first time domain sub-resource is a symbol 6, a second time domain sub-resource is a symbol 8, and a third time domain sub-resource is a symbol 10. For related descriptions, refer to the content corresponding to FIG. 9 and other content above. Details are not described again.

It may be understood that one or more of $S_1$, $L_1$, and $O_i$ may be included in the higher layer signaling or fixed in a protocol. For example, $S_1$ and $L_1$ are included in the DCI, and $O_i$ is included in RRC signaling. Alternatively, $S_1$ is included in the DCI, and $L_1$ and $O_i$ are included in RRC signaling. Alternatively, $S_1$ is included in the DCI, $L_1$ is included in RRC signaling, and $O_i$ is fixed in a protocol. This may further reduce overheads of the DCI and improve reliability of information transmission.

It may be understood that when the M time domain sub-resources are all located in one slot, there are constraint relationships between each $\{S_i, L_i\}$ in combinations $\{S_i, L_i\}$, i $\in$ [1, M] indicated by the indication information in the foregoing embodiments. For example, the constraint relationship may include a time domain symbol that is not repeated between different time domain sub-resources. The constraint relationship may further include that each time domain sub-resource indicated by the indication information cannot exceed the first slot. To be specific, a time domain symbol of any time domain sub-resource should be from 0 to N-1(except the first time domain resource that is repeated in a plurality of time slots). Further, when a part of symbols in a time domain sub-resource indicated by the indication information is outside the first slot, it may be understood that the part of symbols outside the first slot are invalid, and only a part of symbols within the first slot is valid, and may be used to send a sensing signal (downlink data). When all symbols occupied by a time domain sub-resource indicated by the indication information are outside the first slot, it may be understood that the time domain sub-resource is invalid, and a network device does not send a sensing signal (downlink data) on the time domain sub-resource. As described above, the constraint relationship may further include that there is an interval between at least two adjacent time domain sub-resources, that is, the time domain sub-resources are discontinuous. Further, any two adjacent time domain sub-resources are discontinuous, and there is an interval. Further, time intervals between different adjacent time domain sub-resources may be the same or different. This is not limited in this embodiment of this application. For example, when a first time domain resource is formed by three time domain sub-resources a, b, and c, where the time domain sub-resource a occupies a symbol 3, the time domain sub-resource b occupies a symbol 7, and the time domain sub-resource c occupies a symbol 13, an interval between a and b is 4, and an interval between b and c is 6.

In addition, this application provides another communication method. In the method, the foregoing indication information is included in higher layer signaling, for example, an RRC message. To be specific, a network device 110 sends the higher layer signaling, for example, the RRC message to a terminal device 120, to indicate a first time domain resource. Correspondingly, the terminal device 120 receives the higher layer signaling, for example, the RRC message. In the step, an operation performed by the network device 110 may be performed by the processing unit 1100, the processor 2100, or the processing circuit 3100 of the communication apparatus (used as a network device) by using the transceiver unit 1200, the transceiver 2200, or the interface circuit 3200 of the communication apparatus (used as a network device). Correspondingly, an operation performed by the terminal device 120 may be performed by the processing unit 1100, the processor 2100, or the processing circuit 3100 of the communication apparatus (used as a terminal device) by using the transceiver unit 1200, the transceiver 2200, or the interface circuit 3200 of the communication apparatus (used as a network device).

Further, the network device sends physical layer signaling, for example, DCI to the terminal device, to indicate the terminal device to perform PDSCH transmission by using the first time domain resource indicated in the higher layer signaling. In other words, the physical layer signaling, for example, the DCI is used to activate the first time domain resource indicated by the higher layer signaling, for example, the RRC message. Correspondingly, the terminal device receives the DCI.

Further, the network device 110 may perform S102 to send a PDSCH to the terminal device, and correspondingly, the terminal device receives the PDSCH. For specific descriptions, refer to the foregoing descriptions.

This solution may reduce signaling overheads of the DCI and improve signaling transmission reliability.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the technical effects of the solutions provided in embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part making a contribution, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing readable-storage medium includes any medium that can store program code, for example, a USB flash drive, a removable hard disk, a read-only memory (read-only memory, ROM), a random access memory (random access memory, RAM), a floppy disk, a compact disc, or the like.

In addition, this application further provides a computer program. The computer program is configured to implement an operation and/or processing performed by a network device in the information communication method provided in this application.

This application further provides a computer program. The computer program is configured to implement an operation and/or processing performed by a terminal device in the communication method provided in this application.

This application further provides a computer-readable storage medium. The computer-readable storage medium stores computer code. When the computer code is run on a computer, the computer is enabled to perform an operation and/or processing performed by a network device in the communication method provided in this application.

This application further provides a computer-readable storage medium. The computer-readable storage medium stores computer code. When the computer code is run on a computer, the computer is enabled to perform an operation and/or processing performed by a terminal device in the communication method provided in this application.

This application further provides a computer program product. The computer program product includes computer code or a computer program. When the computer code or the computer program is run on a computer, an operation and/or processing performed by a network device in the communication method provided in this application is performed.

This application further provides a computer program product. The computer program product includes computer code or a computer program. When the computer code or the computer program is run on a computer, an operation and/or processing performed by a terminal device in the communication method provided in this application is performed.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   sending downlink control information DCI to a terminal device, wherein the DCI indicates a first time domain resource in a first slot, the first time domain resource comprises M time domain sub-resources, at least two adjacent time domain sub-resources in the M time domain sub-resources are at an interval of a first time period, and M is an integer greater than or equal to 2; and
   sending a physical downlink shared channel PDSCH on the first time domain resource.

2. The method according to claim 1, wherein the method further comprises:
   receiving all or some echo signals of the PDSCH, wherein the echo signals are used to sense a first target.

3. The method according to claim 1 or 2, wherein that the DCI indicates the first time domain resource comprises:
   the DCI comprises start position information of each of the M time domain sub-resources, and/or duration information of each of the M time domain sub-resources.

4. The method according to claim 1 or 2, wherein that the DCI indicates the first time domain resource comprises:
   the DCI comprises at least one of start position information $S_1$ of a first time domain sub-resource in the M time domain sub-resources, duration information $L_1$ of the first time domain sub-resource, and an offset $O_1$ of the first time domain sub-resource, wherein there is a first association relationship between start position information $S_i$ of an $i^{th}$ time domain sub-resource in the M time domain sub-resources and at least one of $S_1$, $L_1$, and $O_1$, and duration information $L_i$ of the $i^{th}$ time domain sub-resource satisfies $L_i = L_1$, wherein i is an integer greater than or equal to 2 and less than or equal to M.

5. The method according to claim 1 or 2, wherein that the DCI indicates the first time domain resource comprises:
   the DCI comprises at least one of start position information $S_1$ of a first time domain sub-resource in the M time domain sub-resources, duration information $L_i$ of an $i^{th}$ time domain sub-resource in the M time domain sub-resources, and an offset $O_1$ of the first time domain sub-resource, wherein there is a second association relationship between start position information $S_i$ of the $i^{th}$ time domain sub-resource and at least one of $S_1$, $L_i$, and $O_1$, wherein i

   is an integer greater than or equal to 2 and less than or equal to M.

6. The method according to claim 1 or 2, wherein that the DCI indicates the first time domain resource comprises:
   the DCI comprises at least one of start position information $S_1$ of a first time domain sub-resource in the M time domain sub-resources, duration information $L_1$ of the first time domain sub-resource, and an offset $O_i$ of an $i^{th}$ time domain sub-resource in the M time domain sub-resources, wherein there is a third association relationship between start position information $S_i$ of the $i^{th}$ time domain sub-resource and at least one of $S_1$, $L_1$, and $O_i$, and duration information $L_i$ of the $i^{th}$ time domain sub-resource satisfies $L_i = L_1$, wherein i is an integer greater than or equal to 2 and less than or equal to M.

7. The method according to claim 1 or 2, wherein that the DCI indicates the first time domain resource comprises:
   the DCI comprises at least one of start position information $S_1$ of a first time domain sub-resource in the M time domain sub-resources, duration information $L$ of the first time domain sub-resource, and first indication information, wherein when the first indication information is a first value, the first indication information indicates that there is a fourth association relationship between start position information $S_i$ of an $i^{th}$ time domain sub-resource in the M time domain sub-resources and at least one of $S_1$ and $L$, and duration information $L_i$ of the $i^{th}$ time domain sub-resource satisfies $L_i = L$, wherein i and n are integers greater than or equal to 2 and less than or equal to M.

8. The method according to claim 1 or 2, wherein that the DCI indicates the first time domain resource comprises: the DCI comprises bitmap information, the bitmap information comprises N bits that are in a one-to-one correspondence with N time units in the first slot, and the M time domain sub-resources comprise a time unit corresponding to a bit whose value is "1", and do not comprise a time unit corresponding to a bit whose value is "0".

9. The method according to any one of claims 1 to 8, wherein before the sending downlink control information DCI to a terminal device, the method further comprises:

   sending radio resource control RRC signaling to the terminal device, wherein the RRC signaling indicates at least one candidate time domain resource, each candidate time domain resource is corresponding to one index, and the at least one candidate time domain resource comprises the first time domain resource; and

that the DCI indicates the first time domain resource comprises: the DCI comprises an index corresponding to the first time domain resource.

10. The method according to any one of claims 1 to 9, wherein the first time period has a length of X symbols, and X is an integer greater than or equal to 1; or the first time period is Y ms, and Y is greater than 0; or the first time period is Z slots, and Z is greater than 0.

11. A communication method, comprising:

receiving downlink control information DCI, wherein the DCI indicates a first time domain resource in a first slot, the first time domain resource comprises M time domain sub-resources, at least two adjacent time domain sub-resources in the M time domain sub-resources are at an interval of a first time period, and M is an integer greater than or equal to 2; and

receiving a physical downlink shared channel PDSCH on the first time domain resource.

12. The method according to claim 11, wherein that the DCI indicates a first time domain resource in a first slot comprises:

the DCI comprises start position information of each of the M time domain sub-resources, and/or duration information of each of the M time domain sub-resources.

13. The method according to claim 11, wherein that the DCI indicates a first time domain resource in a first slot comprises:

the DCI comprises at least one of start position information $S_1$ of a first time domain sub-resource in the M time domain sub-resources, duration information $L_1$ of the first time domain sub-resource, and an offset $O_1$ of the first time domain sub-resource, wherein there is a first association relationship between start position information $S_i$ of an $i^{th}$ time domain sub-resource in the M time domain sub-resources and at least one of $S_1$, $L_1$, and $O_1$, and duration information $L_i$ of the $i^{th}$ time domain sub-resource satisfies $L_1$, wherein i is an integer greater than or equal to 2 and less than or equal to M.

14. The method according to claim 11, wherein that the DCI indicates a first time domain resource in a first slot comprises:

the DCI comprises at least one of start position information $S_1$ of a first time domain sub-resource in the M time domain sub-resources, duration information $L_i$ of an $i^{th}$ time domain sub-resource in the M time domain sub-resources, and an offset $O_1$ of the first time domain sub-resource, wherein there is a second association relationship between start position information $S_i$ of the $i^{th}$ time domain sub-resource and at least one of $S_1$, $L_i$, and $O_1$, wherein i is an integer greater than or equal to 2 and less than or equal to M.

15. The method according to claim 11, wherein that the DCI indicates a first time domain resource in a first slot comprises:

the DCI comprises at least one of start position information $S_1$ of a first time domain sub-resource in the M time domain sub-resources, duration information $L_1$ of the first time domain sub-resource, and an offset $O_i$ of an $i^{th}$ time domain sub-resource in the M time domain sub-resources, wherein there is a third association relationship between start position information $S_i$ of the $i^{th}$ time domain sub-resource and at least one of $S_1$, $L_1$, and $O_i$, and duration information $L_i$ of the $i^{th}$ time domain sub-resource satisfies $L_i = L_1$, wherein i is an integer greater than or equal to 2 and less than or equal to M.

16. The method according to claim 11, wherein that the DCI indicates a first time domain resource in a first slot comprises:

the DCI comprises at least one of start position information $S_1$ of a first time domain sub-resource in the M time domain sub-resources, duration information $L$ of the first time domain sub-resource, and first indication information, wherein when the first indication information is a first value, the first indication information indicates that there is a fourth association relationship between start position information $S_i$ of an $i^{th}$ time domain sub-resource in the M time domain sub-resources and at least one of $S_1$ and $L$, and duration information $L_i$ of the $i^{th}$ time domain sub-resource satisfies $L$, wherein i and n are integers greater than or equal to 2 and less than or equal to M.

17. The method according to claim 11, wherein that the DCI indicates a first time domain resource in a first slot comprises: the DCI comprises bitmap information, the bitmap information comprises N bits that are in a one-to-one correspondence with N time units in the first slot, and the M time domain sub-resources comprise a time unit corresponding to a bit whose value is "1", and do not comprise a time unit corresponding to a bit whose value is "0".

18. The method according to any one of claims 11 to 17, wherein before receiving the downlink control information DCI, the method further comprises:

receiving radio resource control RRC signaling, wherein the RRC signaling indicates at least one candidate time domain resource, each candidate time domain resource is corresponding to one index, and the at least one candidate time domain resource comprises the first time domain resource; and

that the DCI indicates a first time domain resource in a first slot comprises: the DCI comprises an index corresponding to the first time domain resource.

19. The method according to any one of claims 11 to 17, wherein the first time period has a length of X symbols, and X is an integer greater than or equal to 1; or the first time period is Y ms, and Y is greater than 0; or the first time period is Z slots, and Z is greater than 0.

20. A communication apparatus, comprising a processing unit and a transceiver unit, wherein
the processing unit is configured to: send downlink control information DCI to a terminal device by using the transceiver unit, wherein the DCI indicates a first time domain resource in a first slot, the first time domain resource comprises M time domain sub-resources, at least two adjacent time domain sub-resources in the M time domain sub-resources are at an interval of a first time period, and M is an integer greater than or equal to 2; and send a physical downlink shared channel PDSCH on the first time domain resource.

21. The apparatus according to claim 20, wherein
the processing unit is further configured to receive all or some echo signals of the PDSCH by using the transceiver unit, wherein the echo signals are used to sense a first target.

22. A communication apparatus, comprising a processing unit and a transceiver unit, wherein

the processing unit is configured to: receive downlink control information DCI by using the transceiver unit, wherein the DCI indicates a first time domain resource in a first slot, the first time domain resource comprises M time domain sub-resources, at least two adjacent time domain sub-resources in the M time domain sub-resources are at an interval of a first time period, and M is an integer greater than or equal to 2; and receive a physical downlink shared channel PDSCH on the first time domain resource.

23. The apparatus according to claim 20, 21, or 22, wherein that the DCI indicates a first time domain resource in a first slot comprises:
the DCI comprises start position information of each of the M time domain sub-resources, and/or duration information of each of the M time domain sub-resources.

24. The apparatus according to claim 20, 21, or 22, wherein that the DCI indicates a first time domain resource in a first slot comprises:
the DCI comprises at least one of start position information $S_1$ of a first time domain sub-resource in the M time domain sub-resources, duration information $L_1$ of the first time domain sub-resource, and an offset $O_1$ of the first time domain sub-resource, wherein there is a first association relationship between start position information $S_i$ of an $i^{th}$ time domain sub-resource in the M time domain sub-resources and at least one of $S_1$, $L_1$, and $O_1$, and duration information $L_i$ of the $i^{th}$ time domain sub-resource satisfies $L_1$, wherein i is an integer greater than or equal to 2 and less than or equal to M.

25. The apparatus according to claim 20, 21, or 22, wherein that the DCI indicates a first time domain resource in a first slot comprises:
the DCI comprises at least one of start position information $S_1$ of a first time domain sub-resource in the M time domain sub-resources, duration information $L_i$ of an $i^{th}$ time domain sub-resource in the M time domain sub-resources, and an offset $O_1$ of the first time domain sub-resource, wherein there is a second association relationship between start position information $S_i$ of the $i^{th}$ time domain sub-resource and at least one of $S_1$, $L_i$, and $O_1$, wherein i is an integer greater than or equal to 2 and less than or equal to M.

26. The apparatus according to claim 20, 21, or 22, wherein that the DCI indicates a first time domain resource in a first slot comprises:
the DCI comprises at least one of start position information $S_1$ of a first time domain sub-resource in the M time domain sub-resources, duration information $L_1$ of the first time domain sub-resource, and an offset $O_i$ of an $i^{th}$ time domain sub-resource in the M time domain sub-resources, wherein there is a third association relationship between start position information $S_i$ of the $i^{th}$ time domain sub-resource and at least one of $S_1$, $L_1$, and $O_i$, and duration information $L_i$ of the $i^{th}$ time domain sub-resource satisfies $L_i = L_1$, wherein i is an integer greater than or equal to 2 and less than or equal to M.

27. The apparatus according to claim 20, 21, or 22, wherein that the DCI indicates a first time domain resource in a first slot comprises:
the DCI comprises at least one of start position information $S_1$ of a first time domain sub-resource in the M time domain sub-resources, duration information L of the first time domain sub-resource, and first indication information, wherein when the first indication information is a first value, the first indication information indicates that there is a fourth association relationship between start position information

$S_i$ of an $i^{th}$ time domain sub-resource in the M time domain sub-resources and at least one of $S_1$ and $L$, and duration information $L_i$ of the $i^{th}$ time domain sub-resource satisfies $L_t = L$, wherein i and n are integers greater than or equal to 2 and less than or equal to M.

28. The apparatus according to claim 20, 21, or 22, wherein that the DCI indicates a first time domain resource in a first slot comprises: the DCI comprises bitmap information, the bitmap information comprises N bits that are in a one-to-one correspondence with N time units in the first slot, and the M time domain sub-resources comprise a time unit corresponding to a bit whose value is "1", and do not comprise a time unit corresponding to a bit whose value is "0".

29. The apparatus according to any one of claims 20 to 28, wherein before the sending downlink control information DCI to a terminal device, the method further comprises:

   sending radio resource control RRC signaling to the terminal device, wherein the RRC signaling indicates at least one candidate time domain resource, each candidate time domain resource is corresponding to one index, and the at least one candidate time domain resource comprises the first time domain resource; and
   that the DCI indicates a first time domain resource in a first slot comprises: the DCI comprises an index corresponding to the first time domain resource.

30. The apparatus according to any one of claims 20 to 29, wherein the first time period has a length of X symbols, and X is an integer greater than or equal to 1; or the first time period is Y ms, and Y is greater than 0; or the first time period is Z slots, and Z is greater than 0.

31. A computer-readable storage medium, configured to store instructions, wherein when the instructions are run by a computer, the computer is enabled to perform the method according to any one of claims 1 to 11, or perform the method according to any one of claims 12 to 19.

32. A communication apparatus, comprising a processor, wherein the processor is coupled to a memory, the memory is configured to store instructions, and when the instructions are run by the processor, the communication apparatus is enabled to perform the method according to any one of claims 1 to 11.

33. A communication apparatus, comprising a processor, wherein the processor is coupled to a memory, the memory is configured to store instructions, and when the instructions are run by the processor, the communication apparatus is enabled to perform the method according to any one of claims 12 to 19.

FIG. 1

FIG. 2

2000

2200

2100

Transceiver

Processor

2400

2300

Memory

FIG. 3

3100

Processing circuit

3200

Interface circuit

Circuit system

FIG. 4

FIG. 5

FIG. 6

| Row index | $S_1$ | $L_1$ | $S_2$ | $L_2$ | | $S_M$ | $L_M$ |
|---|---|---|---|---|---|---|---|
| 1 | 2 | 2 | 0 | | | 0 | |
| 2 | 4 | 2 | 12 | 2 | ... | 0 | |
| 3 | 6 | 3 | 13 | 1 | | 0 | |
| ... | ... | ... | ... | | | ... | |
| n | 6 | 1 | 9 | 1 | | 13 | 1 |
| n+1 | 5 | 2 | 8 | 2 | | 12 | 2 |
| ... | ... | ... | ... | | | ... | |

FIG. 7

| 0 | 1 | 2 | 3 | 4 | 5 | 6 | 7 | 8 | 9 | 10 | 11 | 12 | 13 |
|---|---|---|---|---|---|---|---|---|---|---|---|---|---|
| 0 | 0 | 0 | 0 | 0 | 0 | 1 | 0 | 0 | 0 | 0 | 0 | 0 | 1 |

FIG. 8

| Row index | $S_1$ | $L_1$ | $O_1$ |
|---|---|---|---|
| 1 | 2 | 2 | 2 |
| 2 | 4 | 2 | 0 |
| 3 | 6 | 3 | 0 |
| ... | ... | ... | ... |
| n | 6 | 1 | 7 |
| n+1 | 5 | 2 | 6 |
| n+2 | 6 | 1 | 6 |
| n+3 | 5 | 2 | 6 |
| n+4 | 13 | 1 | 0 |
| ... | ... | ... | ... |

FIG. 9

## INTERNATIONAL SEARCH REPORT

| International application No. |
| --- |
| **PCT/CN2022/093660** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

EPODOC, WPI, CNKI, CNPAT, 3GPP, IEEE: 感知, 控制信息, 时域, DCI, PDSCH, 下行, 不连续, RB, 位置, 时间, 间隔, 相邻, 符号, 时隙, 回波, 参考信号, 长度, 持续, 偏移, RRC, 索引, 位图, domain, time, RE, element, OFDM, slot, RS

**C. DOCUMENTS CONSIDERED TO BE RELEVANT**

| Category* | Citation of document, with indication, where appropriate, of the relevant passages | Relevant to claim No. |
| --- | --- | --- |
| X | CN 111867074 A (HUAWEI TECHNOLOGIES CO., LTD.) 30 October 2020 (2020-10-30) description, paragraphs [0089]-[0176], [0179]-[0282], [0285]-[0308] and [0338]-[0342] | 1-33 |
| X | CN 111181707 A (HUAWEI TECHNOLOGIES CO., LTD.) 19 May 2020 (2020-05-19) description, paragraphs [0118]-[0314] | 1-33 |
| A | CN 110945817 A (LG ELECTRONICS INC.) 31 March 2020 (2020-03-31) entire document | 1-33 |
| A | US 2021014866 A1 (ZTE CORP.) 14 January 2021 (2021-01-14) entire document | 1-33 |
| A | WO 2021047615 A1 (HUAWEI TECHNOLOGIES CO., LTD.) 18 March 2021 (2021-03-18) entire document | 1-33 |

☐ Further documents are listed in the continuation of Box C. ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 July 2022** | **19 August 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/093660**

| Patent document cited in search report | | | Publication date (day/month/year) | Patent family member(s) | | | Publication date (day/month/year) |
|---|---|---|---|---|---|---|---|
| CN | 111867074 | A | 30 October 2020 | WO | 2020221055 | A1 | 05 November 2020 |
| CN | 111181707 | A | 19 May 2020 | JP | 2022506735 | A | 17 January 2022 |
| | | | | US | 2021266912 | A1 | 26 August 2021 |
| | | | | CA | 3118605 | A1 | 14 May 2020 |
| | | | | EP | 3869886 | A1 | 25 August 2021 |
| | | | | WO | 2020094133 | A1 | 19 May 2020 |
| CN | 110945817 | A | 31 March 2020 | JP | 2020522964 | A | 30 July 2020 |
| | | | | US | 2020120680 | A1 | 16 April 2020 |
| | | | | EP | 3633902 | A1 | 08 April 2020 |
| | | | | KR | 20180134305 | A | 18 December 2018 |
| | | | | WO | 2018226054 | A1 | 13 December 2018 |
| | | | | EP | 3926881 | A1 | 22 December 2021 |
| US | 2021014866 | A1 | 14 January 2021 | AU | 2018417513 | A1 | 29 October 2020 |
| | | | | KR | 20200138382 | A | 09 December 2020 |
| | | | | WO | 2019191977 | A1 | 10 October 2019 |
| | | | | JP | 2021520135 | A | 12 August 2021 |
| | | | | EP | 3777385 | A1 | 17 February 2021 |
| | | | | CN | 111656834 | A | 11 September 2020 |
| WO | 2021047615 | A1 | 18 March 2021 | CN | 112564873 | A | 26 March 2021 |
| | | | | US | 20220201715 | A1 | 23 June 2022 |
| | | | | EP | 4024739 | A1 | 06 July 2022 |

Form PCT/ISA/210 (patent family annex) (January 2015)